# EUROPÄISCHE PATENTSCHRIFT

(11) **EP 1 466 117 B1**
(45) Veröffentlichungstag und Bekanntmachung des Hinweises auf die Patenterteilung: **12.10.2005**
(21) Anmeldenummer: 02706721.4
(22) Anmeldetag: 18.01.2002
(51) Int. Cl.: F16K 31/04, H02K 41/03

(54) **VERFAHREN UND ANORDNUNG ZUM ANTRIEB EINES SCHUBKÖRPERS DURCH EINEN BIDIREKTIONALEN LINEAREN MAGNETANTRIEB**
METHOD AND SYSTEM FOR PROPELLING A SLIDING BODY BY MEANS OF A BI-DIRECTIONAL, LINEAR MAGNETIC DRIVE
PROCEDE ET DISPOSITIF D'ACTIONNEMENT D'UN CORPS DE POUSSEE AU MOYEN D'UN ENTRAINEMENT MAGNETIQUE LINEAIRE ET BIDIRECTIONNEL

(43) Veröffentlichungstag der Anmeldung: 13.10.2004
(73) Patentinhaber: Vetco Gray Controls Limited, Bristol BS48 1BS (GB)
(72) Erfinder: KROKOSZINSKI, Hans-Joachim, 69226 Nussloch (DE); KAHNERT, Andreas, 64372 Ober-Ramstadt (DE); WALDI, Wolfgang, 69226 Nussloch (DE); DISSELNKÖTTER, Rolf, 69256 Mauer (DE)
(74) Vertreter: Newstead, Michael John
(86) Internationale Anmeldenummer: PCT/EP2002/000471
(87) Internationale Veröffentlichungsnummer: WO 2003/060364

(56) Entgegenhaltungen:
- EP-A- 0 482 321
- EP-A- 0 984 133
- US-A- 4 796 708
- US-A- 5 600 189
- US-A- 6 137 195

## Beschreibung

Die Erfindung betrifft ein Verfahren zum Antrieb eines Schubkörpers durch einen bidirektionalen linearen Magnetantrieb sowie eine Anordnung zur Durchführung des erfindungsgemäßen Verfahrens.

Bei Bohrungen in sehr großen Tiefen, z.B. Ölbohrungen, werden besondere Anforderungen an die verwendeten Komponenten und Systeme gestellt: Temperaturen von bis zu 225°C, Drücke bis 700bar sowie korrosive Atmosphäre verursachen extreme Auslegungsbedingungen für die eingesetzte Technik. Der zur Verfügung stehende Raum für eine Komponente ist durch das Produktions- beziehungsweise Förderrohr gegeben und begrenzt daher die Möglichkeiten bei der Konstruktion dieser Komponente.
Deshalb werden beispielsweise Drosselventile in solchen Bohrungen heute meistens mit Hydrauliksystemen angetrieben. Diese können die hohen erforderlichen Stellkräfte von ca. 25000 N aufbringen und die Stellbewegung von typischerweise 200mm ausführen. Schwierig ist die Druckfluidversorgung insbesondere bei multilateralen Bohrungen mit Verzweigungen in Seitenarme. Lange Ölversorgungsleitungen dieser Hydraulik mit Temperaturunterschieden sind zu beherrschen: beispielsweise sind typische Temperaturwerte 200°C in einer Tiefbohrung, 4°C am Meeresboden sowie -20°C an der Förderstelle oder Förderplattform. Diese Temperaturdifferenzen verursachen ungleichmäßige Materialdehnungen, die häufiger Grund für Betriebsstörungen sind.

Ein üblicher Stellantrieb für ein solches Drosselventil hat typischerweise nicht mehr als fünf Stellungen, nämlich geschlossen, ¼ offen, ½ offen, ¾ offen sowie offen, so daß nur eine entsprechend grobe Regelung ermöglicht ist. Außerdem wird bei solchen Anwendungen häufig eine Lebensdauer von wenigstens zehn Jahren sowie eine hohe Zuverlässigkeit gefordert.

Wenn hier zur besseren Regelfähigkeit elektrische Antriebe eingesetzt werden, beispielsweise Schrittmotoren, kann die erforderliche Antriebskraft aufgrund des knappen Raumangebotes in der Bohrung nur über ein Getriebe aufgebracht werden. Die Anzahl der Bauteile, insbesondere die der beweglichen Teile, die dieses Antriebssystem besitzt und wirkt sich allerdings negativ auf die Zuverlässigkeit dieser Antriebsalternative aus.

Aus US 6 137 195 A is A ein bidirektionale Antrieb mit einem ersten Linearantrieb und einem zweiten Drehantrieb bekannt.

Dieses Dokument wird als nächstliegender Stand der Technik gesehen und Korrespondiert mit den Oberbegriffen der Ansprüche 1 und 9.

Die Aufgabe der Erfindung ist es ein Verfahren der eingangs genannten Art zu schaffen, das einen Schubkörper ohne verfahrenstechnische Begrenzung des Schubweges antreibt und dabei hohe Schubkräfte realisiert, wie sie beispielsweise zum Verstellen eines Ventils in tiefen Bohrungen zur Ölförderung erforderlich sind. Weiterhin ist es die Aufgabe der Erfindung eine Anordnung zur Durchführung des erfindungsgemäßen Verfahrens bereitzustellen, die mit hoher Zuverlässigkeit und Lebensdauer arbeitet und einen einfachen und robusten Aufbau aufweist.

Diese Aufgaben werden durch das Verfahren gemäß der im Anspruch 1 genannten Merkmale sowie durch die Anordnung mit den in Anspruch 9 genannten Merkmalen gelöst.

Demnach wird erfindungsgemäß vorgeschlagen, das Verfahren zum Antrieb eines Schubkörpers durch einen bidirektionalen linearen Magnetantrieb mit wenigstens je einem ersten und einem zweiten Aktor durchzuführen, wobei der wenigstens eine erste Aktor mit wenigstens einer Spule und einem Joch versehen ist und mit wenigstens einem Ankerring zusammenarbeitet, der den Schubkörper alternierend beaufschlagt, indem der Schubkörper von dem wenigstens einen Ankerring, der von dem hieran angreifenden wenigstens einen zweiten Aktor gedreht wird, axial verschoben wird und anschließend örtlich fixiert wird, wobei der Schubkörper auf diese Weise schrittweise soweit verschoben wird, bis er seine jeweilige Endposition erreicht hat.

Vorteilhafterweise wird die Antriebsleistung elektrisch zugeführt und ist frei von den üblichen mechanischen Risiken von kraftübertragenden Leitungen eines hydraulischen Systems. Das Verfahren ermöglicht es, einen Schubkörper in beliebig vielen Einzelschritten von beispielsweise 1 mm oder 2mm Länge zu bewegen. Das ermöglicht eine entsprechend der Schrittlänge eines Einzelschritts genaue Ansteuerung, beispielsweise eines Ventils, wenn der Schubkörper als Stellorgan des Ventils eingesetzt wird. Außerdem kann auf diese Weise in besonders einfacher Weise ein bestimmter Durchfluß durch eine Rohrleitung eingestellt werden, indem der Schubkörper eine entsprechend exakte, vorgegebene Ventilstellung bewirkt. Der bidirektionale lineare Magnetantrieb wird dann als Antrieb für ein Durchflußregelventil betrieben.

Eine vorteilhafte Ausgestaltung des Verfahrens kann darin bestehen, daß der Ankerring oder der wenigstens eine zweite Aktor mit einer Rastvorrichtung derart zusammenarbeitet, daß der Schubkörper wenigstens dann durch die Rastvorrichtung örtlich fixiert wird, wenn der Ankerring den Schubkörper nicht beaufschlagt.
Durch diese Ausgestaltung wird ein besonders einfacher Antrieb und eine einfache Koordination der Arbeitsschritte von der Rastvorrichtung sowie dem Ankerring beziehungsweise dem wenigstens zweiten Aktor erreicht.

Vorteilhaft vereinfacht wird das erfindungsgemäße Verfahren, wenn die Rastvorrichtung wenigstens eine Drehbewegung ausführt, um den Schubkörper zeitweise örtlich zu fixieren. Auf diese Weise wird erreicht, daß die Rastvorrichtung sowie der wenigstens eine Ankerring im wesentlichen nur Drehbewegungen um die Längsachse ausführen.

Die Rastvorrichtung kann aber auch durch wenigstens einen dritten Aktor bewegt werden und ist dann ist vorteilhafterweise eigenständig ansteuerbar.

Eine vorteilhafte Ausgestaltung des Verfahrens wird erreicht, wenn der Schubkörper von dem wenigstens einen ersten Aktor formschlüssig beaufschlagt wird. Die axiale Kraftübertragung zwischen dem wenigstens einen Ankerring und dem Schubkörper ist dadurch auf einfache Weise ermöglicht.

Eine weitere Ausgestaltung des erfindungsgemäßen Verfahrens ist dadurch gekennzeichnet, daß der wenigstens eine Ankerring mit dem Schubkörper zusammenarbeitet, indem der wenigstens eine Ankerring in eine Drehrichtung um die Längsachse gedreht wird, und daß die Rastvorrichtung eine Verrastung herbeiführt, welche den Schubkörper jeweils solange lagefixiert, bis der wenigstens eine erste Aktor erneut den Schubkörper beaufschlagt.
Der wenigstens eine zweite Aktor muß den wenigstens einen Ankerring in nur einer Drehrichtung antreiben.

Eine weitere Ausgestaltung des Verfahrens sieht vor, daß der wenigstens eine Ankerring mit dem Schubkörper zusammenarbeitet, indem der wenigstens eine Ankerring alternierend in die Drehrichtungen um die Längsachse gedreht wird, und daß die Rastvorrichtung eine Verrastung herbeiführt, welche den Schubkörper jeweils solange lagefixiert, bis der wenigstens eine erste Aktor erneut den Schubkörper beaufschlagt.
Hier ist in einer Ausgestaltung des Verfahrens vorgesehen, daß der Ankerring bei jeder Drehbewegung in entgegengesetzter Richtung zu seiner Drehrichtung im vorausgehenden Bewegungsschritt dreht.
Es ist aber auch denkbar, daß zunächst einige Bewegungsschritte in die eine Drehrichtung und danach mehrere Bewegungsschritte in die entgegengesetzte Drehrichtung erfolgen. Es bestehen auch vorteilhafterweise keine prinzipiellen Einschränkungen, daß die Anzahl der Bewegungsschritte in die eine oder andere Drehrichtung gleich groß sein muß.

Das Verfahren kann auf einfache Weise beendet werden, wenn ein bestimmtes Abschaltkriterium erreicht wird.

Wird beispielsweise eine bestimmte Anzahl von Verschiebeschritten nach dem Start des Verfahrens erreicht, wird das Verfahren beendet. Die zurückgelegte Gesamtverschiebung des Schubkörpers läßt sich auf einfache Weise aus der Anzahl der Verschiebeschritte sowie den einzelnen den Verschiebeschritten zugeordneten Verschiebelängen bestimmen.

Eine weitere Möglichkeit, das Verfahren zu beenden, besteht darin, mittels eines Signals die Abschaltung zu bewirken. Vorteilhaft einfach generiert beispielsweise ein Endschalter ein solches Signal, wenn eine bestimmte Position des Schubkörpers erreicht ist.

Ein nützliches Signal zur Abschaltung kann aber auch ein entsprechendes Signal einer entsprechenden Wegmessung sein.

Erfindungsgemäß wird eine Anordnung zur Durchführung des erfindungsgemäßen Verfahrens zum Antrieb eines Schubkörpers durch einen bidirektionalen linearen Magnetantrieb vorgeschlagen, bei welcher Anordnung der bidirektionale lineare Magnetantrieb wenigstens je einen ersten und einen zweiten Aktor aufweist, wobei der wenigstens eine erste Aktor wenigstens ein Joch, wenigstens eine Spule sowie wenigstens einen Ankerring hat und zur im wesentlichen axialen Bewegung des Schubkörpers vorgesehen ist, wobei der Abstand zwischen dem wenigstens einen Joch und dem wenigstens einen Ankerring als aktiver Luftspalt ausbildet ist, wobei der wenigstens eine Ankerring zur Zusammenarbeit mit dem Schubkörper vorgesehen ist, wobei der wenigstens zweite Aktor wenigstens zur Drehung des wenigstens einen Ankerrings vorgesehen ist, und wobei eine Rastvorrichtung zur zeitweisen Fixierung des Schubkörpers vorgesehen ist.

Die geforderte Antriebsenergie wird durch einen elektrischen Antrieb mit einer geringen Anzahl von beweglichen Bauelementen zur Verfügung gestellt. Damit ist erreicht, daß die erfindungsgemäße Anordnung entsprechend störungsunanfällig bei Änderungen der Umgebungsbedingungen, wartungsarm, robust und mit hoher Zuverlässigkeit arbeitet.

Eine vorteilhafte Ausgestaltung der Anordnung liegt vor, wenn die Oberfläche des Schubkörpers im Bereich der dem wenigstens einen Ankerring zugewandten Fläche zumindest teilweise mit einer Haltestruktur versehen ist, und wenn der wenigstens eine Ankerring an der dem Schubkörper zugewandten Fläche mit einer zur Haltestruktur kompatiblen Gegenstruktur versehen ist, die sich durch Verdrehen um die Längsachse des Ankerringes in die Haltestruktur einfügt.

Besonders vorteilhaft ist es, wenn der Schubkörper eine zylindrische Grundform aufweist. Mit dieser Grundform werden die Drehbewegungen begünstigt sowie die Konstruktion des Ankerringes und dessen Verbindung zum Schubkörper vereinfacht.

Auch eine rohrförmige Grundform des Schubkörpers ist vorteilhaft, weil diese Gestalt insbesondere in Bohrlöchern zur Rohstofförderung häufig benötigt wird. Hierbei bildet ein äußeres Produktionsrohr zusammen mit einem in diesem geführten Transportrohr einen Ringraum, in dem die im Bohrloch erforderlichen Komponenten untergebracht sind. Den Schubkörper rohrförmig auszuführen, ist somit vorteilhaft.

Die Haltestruktur weist achsparallele erste Ausnehmungen auf. In diesen ersten Ausnehmungen kann die axiale Bewegung der Gegenstruktur stattfinden. Diese ersten Ausnehmungen sind fertigungstechnisch vorteilhafterweise oft Nuten oder Schlitze ausgeführt.

Zusätzlich weist die Haltestruktur zweite Ausnehmungen in radialer Richtung auf, beispielsweise auch als Nuten oder Schlitze ausgeführt. Die Gegenstruktur greift durch die Drehbewegung in die zweiten Ausnehmungen ein. Bei einem Bewegungsschritt wird die gesamte Antriebsleistung des bidirektionalen linearen Magnetantriebs über die Gegenstruktur in die Haltestruktur auf den Schubkörper oder umgekehrt übertragen.
Die Haltestruktur sowie die Gegenstruktur sind erfindungsgemäß mechanisch besonders beansprucht und demgemäß auszuführen, gegebenenfalls mit anderen Materialien als die Haltestruktur oder die Gegenstruktur.
Als vorteilhaft erweist sich eine Gegenstruktur und Haltestruktur aus Edelstahl.

Edelstahl ist nur sehr schwach magnetisch und ist daher als Material für den wenigstens einen Ankerring ungeeignet. Eine Gegenstruktur, die aus Edelstahl hergestellt ist, wird mit dem wenigstens einen Ankerring erfindungsgemäß fest verbunden. Dann sind die Vorteile des magnetischen Werkstoffs sowie die vorteilhaften mechanischen Eigenschaften des Edelstahls miteinander kombiniert für diese Ausgestaltung des wenigstens einen Ankerrings. Besonders vorteilhaft wird als Gegenstruktur eine Mutter oder Reversiermutter verwendet.

Die Gegenstruktur kann dem wenigstens einen Ankerring aber auch angeformt sein.

Die Lage der Stelle, an der die Haltestruktur sowie die Gegenstruktur ineinandergreifen, spielt erfindungsgemäß nur eine untergeordnete Rolle. Diese Stelle kann, beispielsweise nach den gegebenen Platzverhältnissen, wenigstens teilweise außerhalb des Abschnitts der Längsachse vorgesehen sind, in dem der wenigstens eine Ankerring vorgesehen ist.

Sind anforderungsgemäß besonders hohe Antriebskräfte aufzubringen, kann vorteilhafterweise die Anzahl der ersten Aktoren erhöht werden. Die Ankerringe sind dann derart angeordnet, daß sie gemeinsam Kräfte auf den Schubkörper übertragen oder von diesem aufnehmen. Die Bauart der ersten Aktoren kann also gleichbleiben. Ein beengtes Raum- oder Ringraumangebot für den Antrieb wird auf diese Weise vorteilhaft berücksichtigt. Lediglich die Anzahl der ersten Aktoren muß dem Antriebsbedarf angepaßt werden. Damit besteht vorteilhafterweise keine Beschränkung der maximalen Schubkraft seitens der ersten Aktoren.

Auch Redundanzen sind derart auf besonders einfache Weise gestaltbar.

Ist z.B. aus Sicherheitsgründen eine mechanische Redundanz gefordert, wird zunächst einfach die Zahl der erforderlichen ersten Aktoren gewählt. Dementsprechend ist Redundanz vorhanden, wenn die gewählte Anzahl der ersten Aktoren mindestens um eins höher gewählt wird, als auslegungsbedingt erforderlich. Die Redundanz erhöht sich entsprechend, wenn die Anzahl der ersten Aktoren weiter erhöht wird.

Wird eine elektrische Redundanz gefordert, ist die Anzahl der ersten Aktoren ebenfalls über die auslegungsbedingt erforderliche Zahl hinaus zu erhöhen, was auf gleiche Weise einfach möglich ist.

Die mechanische sowie die elektrische Redundanz ist mit gleichartigem Vorgehen wie bei den ersten Aktoren auch für die zweiten Aktoren für den radialen Antrieb der Bauelemente vorteilhaft einfach zu erreichen.

Erfindungsgemäß wird die Rastvorrichtung mechanisch an die Drehbewegung des wenigstens einen Ankerrings angekoppelt. Die Ankopplung erfolgt beispielsweise mechanisch an wenigstens einen Ankerring oder an den wenigstens einen zweiten Aktor.
Dreht sich dann der wenigstens eine Ankerring beispielsweise mit der Gegenstruktur in die Haltestruktur, bewegt sich die Rastvorrichtung günstigerweise automatisch mit, in eine Position, in der eine axiale Bewegung des Schubkörpers ermöglicht ist. Dreht die Gegenstruktur dann wieder aus der Haltestruktur heraus, bewegt sich die Rastvorrichtung ebenfalls mit und gelangt in eine andere Position in dereine axiale Bewegung oder Rückstellung des Schubkörpers verhindert ist.

Eine weitere Möglichkeit ist ein eigener Antrieb für die Rastvorrichtung mittels wenigstens eines dritten Aktors. Dann sind zwangläufig insgesamt wenigstens drei Aktoren beziehungsweise Antriebe vorhandenen.

Es ist auch denkbar, daß alle Aktoren redundant vorhanden sind, also beispielsweise die Rastvorrichtung mit redundanten zweiten Aktoren sowie der wenigstens eine Ankerring mit redundanten ersten Aktoren ausgestattet sind.

Die Lage des Schubkörpers kann vorteilhafterweise durch eine Anzeige auch sichtbar gemacht werden. Die Signale, die eine solche Anzeige erhält, werden von einem Schrittzähler, einem Wegaufnehmer oder anderen Signalgebern generiert, die geeignet sind, Positionen zu messen, zu bestimmen oder zu errechnen.

Da der bidirektionale lineare Magnetantrieb auch insbesondere unter extremen Umweltbedingungen eingesetzt wird, werden die ersten, zweiten und gegebenenfalls die dritten Aktoren in einem solchen Fall vorteilhafterweise gekapselt ausgeführt.

Das verhindert das Eindringen von Schmutz oder anderen Fremdstoffen, die möglicherweise den Betrieb der Anordnung negativ beeinflussen.

Wird der bidirektionale lineare Magnetantrieb unter hohem Umgebungsdruck in aggressiven oder verschmutzten Medien betrieben, erweist sich erfindungsgemäß eine bewegliche Dichtungswand zur Kapselung als günstig. Die Druckdifferenz zwischen dem gekapselten Bereich und der Umgebung kann dann durch die Bewegung einer nahezu starren oder Dehnung einer flexiblen oder dehnbaren Dichtungswand kompensiert werden. Das Eindringen von Schmutzpartikeln oder eines aggressiven Mediums in den bidirektionalen linearen Magnetantrieb ist auf diese weise vermieden.

Ist die Dichtungswand nahezu starr und unflexibel, kann sie insgesamt beweglich ausgeführt werden, indem diese an einer Gleitfläche, beispielsweise längsachsenparallel verschoben sowie gegebenenfalls geführt wird. Dann erweist sich eine schleifende Dichtung zwischen der beweglichen Dichtungswand und der Gleitfläche als nützliche Ausstattung, um das Eindringen von Schmutz in den gekapselten Bereich zu verhindern, aber gleichzeitig die Bewegung der Dichtungswand zu ermöglichen.

Steigt der Umgebungsdruck an, muß ein entsprechend größerer Druckausgleich erfolgen mit dementsprechend größerem Ausgleichsvolumen.

Die Dehnungen beziehungsweise die notwendigen Bewegungen der Dichtwand werden dann besonders klein, wenn erfindungsgemäß die Kapselung, also der komplette gekapselte Bereich mit einem flüssigen Medium gefüllt ist.

Insbesondere ist ein hochtemperaturbeständiges Öl vorteilhaft in der Kapselung eingesetzt, weil es neben dem Druck auch die oftmals vorhandenen hohen Temperaturen erträgt.

Die in die Aktoren, insbesondere in die wenigstens ersten Aktoren, eingesetzten Permanentmagnete sind vorzugsweise aus hartmagnetischem Material, um eine möglichst breite Hystereseschleife zu erhalten. Insbesondere bietet sich als hartmagnetisches Material AlNiCo an.

Für Anordnungen die unter extremen Umgebungsbedingungen eingesetzt werden, insbesondere bei hohen Umgebungstemperaturen, weist die Curie- Temperatur der eingesetzten hartmagnetischen Werkstoffe Werte auf, die höher als 600°C sind, um eine Entmagnetisierung oder eine zu kurze Lebensdauer zu vermeiden.

Hingegen werden insbesondere der wenigstens eine Ankerring sowie das Joch der ersten Aktoren aus weichmagnetischen Werkstoffen gefertigt, insbesondere auch RNi12. Diese Werkstoffe vermindern Ummagnetisierungsverluste und erreichen eine vorteilhaft hohe Sättigungsinduktion.

Zur Stromversorgung der Antriebe bestehen erfindungsgemäß mehrere Möglichkeiten.

Eine besonders kompakte Bauweise der Stromversorgung wird erreicht, wenn nur ein Netzgerät die vorhandenen Antriebe mit Strom versorgt.

Denkbar ist, daß mehrere Netzgeräte vorhanden sind. Ein Netzgerät versorgt dann beispielsweise den wenigstens einen ersten Aktor sowie ein weiteres Netzgerät den wenigstens einen zweiten Aktor für die Drehbewegung und so weiter.

In einer weiteren vorteilhaften Ausgestaltung erhält jeder erste, zweite oder dritte Aktor ein nur ihm zugeordnetes Netzteil. Das erhöht die Sicherheit der Stromversorgung, reduziert also die Ausfallwahrscheinlichkeit.

Auch bei den Netzgräten ist eine Redundanz sinnvoll. Demgemäß wird wenigstens ein Netzteil mehr vorhanden sein, als von der elektrischen Auslegung her notwendig ist. Fällt nun ein Netzteil aus, auch zeitweise, beispielsweise wegen Überhitzung, kann eine Steuerungseinrichtung auf das redundante Netzteil umschalten. Ein Weiterbetrieb ohne Unterbrechungen ist gewährleistet.

Soll ein besonders abgesicherter Betrieb oder eine besondere hohe Verfügbarkeit erreicht werden, werden entsprechend mehr Netzteile der Anordnung zugefügt, beispielsweise bis jeder Aktor mit zwei Netzteilen ausgestattet ist.

Die Steuerungseinrichtung kann in einer vorteilhaften Ausgestaltung alle Bewegungsabläufe der Aktoren und Bauelemente der Anordnung koordinieren. Eine vorteilhafte Ausstattung der Steuerungseinrichtung ist auch gegeben, wenn Signale generiert oder verarbeitet sowie Berechnungen von dieser durchgeführt werden.

Aus den VDI Fortschrittsberichten, Reihe 8, Nr.547 "Untersuchung der Systemdynamik eines fehlertoleranten elektrohydraulischen Stellantriebs mit Direct-Drive-Ventil" von Dipl.-Ing. Uwe Klingauf, Taufkirchen, ist ein elektromagnetischer Antrieb für den Flugzeugbau bekannt, der eine hohe Antriebskraft aufbringen kann, jedoch in seinem Hub auf ca. 0,8 mm begrenzt ist. Der Antrieb überträgt die Kraft auf eine Achse, die entsprechend um ca. 0,8mm ausgelenkt wird. Die Auslenkung wirkt über ein Hauptsteuerventil auf eine hydraulische Kraftstufe, die letztlich das Stellorgan der Regelung ist.

Weitere vorteilhafte Ausgestaltungen der Erfindung sind in den weiteren Unteransprüchen angegeben.

Anhand von in den Zeichnungen dargestellten Ausführungsbeispielen sollen die Erfindung, vorteilhafte Ausgestaltungen und Verbesserungen der Erfindung, sowie besondere Vorteile der Erfindung näher erläutert und beschrieben werden.

Es zeigen:
- Fig. 1: ein skizzenhaftes Schnittbild des Bereiches um einen Luftspalt,
- Fig. 2: ein Längsschnitt durch eine Anordnung von ersten Aktoren,
- Fig. 3: eine Ansicht auf einen Schnitt durch die Ebene A-A durch einen ersten Aktor,
- Fig. 4: eine dreidimensionale Ansicht auf eine Ausgestaltung einer erfindungsgemäßen Anordnung,
- Fig. 5 A-F: Skizzen, die mit den verschiedenen Arbeitsschritten des erfindungsgemäßen Verfahrens korrespondieren,
- Fig. 6: eine dreidimensionale Ansicht auf einen Magnetantrieb eines Rastenelements und
- Fig. 7: die Ansicht auf einen Längsschnitt durch eine beispielhafte erfindungsgemäße Anordnung.

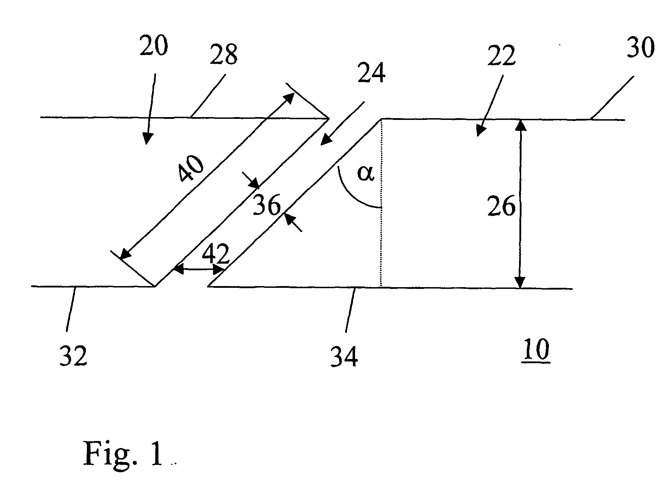

Fig. 1 zeigt ein skizzenhaftes Schnittbild des Bereiches um einen Luftspalt 24 zwischen einem Joch 20 und einem Anker 22 eines Luftspaltbereichs 10 in einem bidirektionalen Magnetantrieb. Der Anker 22 sowie das Joch 20 weisen die Materialdikke 26 auf, und zwar in Richtung ihrer Ausdehnung zwischen den entsprechend zugeordneten Oberseiten 28 beziehungsweise 30 sowie ihren Unterseiten 32 beziehungsweise 34 gesehen. Die ebenen Seitenflächen, in der Fig.1 als Seitenlinien zu sehen, des Jochs 20 sowie des Ankers 22, die sich gegenüberstehen, weisen den konstanten Abstand 36 auf und besitzen einen Winkel α zur Lotrechten der Oberseiten 28, 30. Die Seitenlinien der sich gegenüberliegenden Seitenflächen, weisen eine Länge 40 auf, die um den Faktor des Reziprokwertes des Kosinus des Winkels α größer ist als die Materialdicke 26 des Jochs 20 beziehungsweise des Ankers 22. Ein maximaler Schubweg 42 in Richtung der Raumlage der Oberseiten 28, 30, ergibt sich als der mit dem Faktor des Reziprokwertes des Kosinus des Winkels α multiplizierten konstanten Abstands 36 der sich gegenüberliegenden Seitenflächen.
Die Fig.1 zeigt also diejenige Lage des Jochs 20 und des Ankers 22 zueinander, bei der diese maximal voneinander entfernt sind. Mit Erhöhung des maximalen Schubwegs 42 sinkt die magnetische Kraftwirkung zwischen dem Joch 20 und dem Anker 22. Durch geeignete Wahl des Winkels α kann die magnetische Kraftwirkung jedoch wenigstens teilweise wieder ausgeglichen werden. Für maximale Schubwege 42 bis 2mm liegt das Kraftmaximum bei einem Winkel α von 0° oder nahe bei diesem Wert. Bei Wahl eines größeren Wertes für den maximalen Schubweg 42 als 2mm, steigt der besonders günstige Wert des Winkels α auf 45° gegebenenfalls auch auf noch höhere Werte.

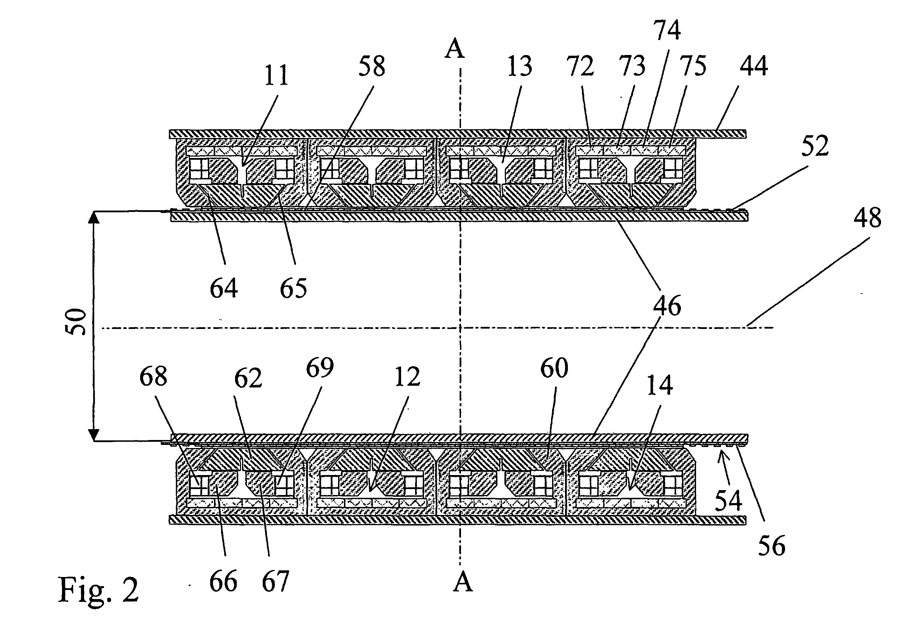

Fig. 2 zeigt ein Schnittbild längs durch vier erste Aktoren 11, 12, 13, 14 eines bidirektionalen Magnetantriebes, die in einem Ringraum zwischen einem äußeren Rohr, beispielsweise einem Bohrlochrohr, und einem inneren Rohr 46, beispielsweise einem Produktionsrohr, angeordnet sind.
In Schnittbild ist die Symmetrieachse der rotationssymmetrischen Anordnung als Symmetrielinie 48 des Längsschnittes dargestellt. Das innere Rohr 46 besitzt einen Außendurchmesser 50. Die lichte Weite eines Transportrohrs 52 ist gerade etwas größer als der Außendurchmesser 50 gewählt sowie dessen dem inneren Rohr zugewandte Fläche, der Innenseite, glatt gestaltet, daß es auf und über das innere Rohr 46 geführt beweglich ist. Die Außenseite des Transportrohrs 52 weist eine Haltestruktur 54 auf, die Quernute 56 mit einem rechteckigen Profil in radialer Richtung sowie Längsnute in axialer Richtung, die jedoch nicht dargestellt sind, hat. Im Bereich der weiteren Aktoren 11, 12, 13, 14 ist ein Gegenstrukturelement 58 im Eingriff in die Haltestruktur des Transportrohrs 52. Im Schnittbild ist zu erkennen, daß die dem Transportrohr zugewandten Konturen des Gegenstrukturelements 58 genau auf die Haltestruktur 54 abgestimmt und daher die Quernute 56 in diesem Bereich vollständig mit dem Gegenstrukturelement 58 ausgefüllt sind. Das Strukturelement 58 ist im wesentlichen ein Rohrabschnitt, dessen Fläche, die der Haltestruktur 54 zugewandt ist, wie beschrieben konturiert ist, an seiner äußeren Mantelseite glatt ist sowie mit jedem der Ankerringe 62 der ersten Aktoren 11, 12, 13, 14 verbunden ist. Die Ankerringe 62 der ersten Aktoren 11, 12, 13, 14 sind also letztlich mittels des Gegenstrukturelements 58 kraftschlüssig miteinander verbunden und formen auf diese Weise einen gemeinsamen wirkenden Gesamtankerring. Es ist leicht denkbar, daß anstatt des mit den Ankerringen 62 sowie mit einem Gegenstrukturelement 58 gebildeten Gesamtankerring, ein solcher Gesamtankerring aus einem Element vorhanden ist.
Alle vier ersten Aktoren 11, 12, 13, 14 sind gleich gestaltet und sind dicht aneinander anliegend, den zur Verfügung stehenden Ringraum zwischen dem äußeren Rohr 44 und dem Transportrohr 52 vollständig einnehmend, angeordnet. Die ersten Aktoren 11, 12, 13,14 ist demgemäß ringförmig, konzentrisch sowie symmetrisch zu einer Symmetrielinie 48 hin aufgebaut.

Ein wesentliches Element eines ersten Aktors 11, 12, 13 oder 14 ist ein Jochring 60, der als Hohlkörper ausgestaltet ist, und auf diese Weise die äußere Hülle des ersten Aktors 11, 12, 13 oder 14 bildet. Insofern ist das weitere Joch 60 auch die seitliche Begrenzung zwischen dem Innern des ersten Aktors 11, 12, 13 oder 14 sowie dem umgebenden Ringraum bildet. Der weitere Jochring 60 ist an beiden in Achsrichtung weisenden Seitenteilen an der zu dem Transportrohr 52 weisenden Seite mit einem Winkel von ca. 45° zur Mitte der Innenseite des ersten Aktors 11, 12, 13 oder 14 hin angephast. Diese Phase beginnt im Abstand von ca. einem Viertel der Ringraumhöhe vom inneren Durchmesser des ersten Aktors 11, 12, 13 oder 14 aus gesehen. Die vom weiteren Jochring 60 gebildete äußere Hülle ist nur an einer Stelle offen, nämlich an der dem Transportrohr 52 zugewandten Fläche. In dieser Fläche ist eine Öffnung, die geometriebedingt ringförmige ausgebildet sowie durch die angephasten Flanken der Jochringseitenbereiche begrenzt ist. In dieser Öffnung ist der Ankerring 62 des ersten Aktors 11, 12, 13 oder 14 ringförmigen eingepaßt. Zwischen dem Ankerring 62 und den Flanken des Jochringes 60 ist jeweils ein kleiner Spalt 64, 65 vorhanden. Diese Spalte 64, 65 ermöglichen die Bewegung des Ankerrings 62 in axialer Richtung und die Streckenlänge zwischen Ankerring 62 und Jochring 60 in axialer Richtung bestimmt den maximal ausführbaren Bewegungsschritt des ersten Aktors 11, 12, 13 oder 14.
Der Ankerring 62 ist symmetrisch zu einer gedachten Symmetrieebene ausgebildet, die in axialer Richtung genau mittel im jeweiligen ersten Aktor 11, 12, 13 oder 14 verläuft sowie senkrecht zur Symmetrielinie 48 ist. Der Ankerring 62 weist an seiner dem Transportrohr 52 zugewandten Seite zwei Formteile 66, 67 auf, die ungefähr die Form eines 90° Krümmers haben und so angeordnet sind, daß ein Schenkel des Formteils in der Symmetrieebene liegt und der andere Schenkel, der mit einer ebenen Abschlußfläche endet, sich senkrecht aus der Symmetrieebene herausragt. Zwischen einer Abschlußfläche und der jeweiligen Seitenwand der entsprechenden Hälfte des Jochrings 60 befindet sich je ein Permanentmagnetring 68, 69, der im Schnittbild dieser Fig. 1 eine fast quadratische Form aufweist.

Im Hohlraum des Jochrings 60 zwischen dem Bereich mit dem größten Durchmesser und den Permanentmagneten 68, 69 befinden sich vier Spulen 72, 73, 74, 75, die gleichgestaltet sind und den insgesamt zur Verfügung stehenden Zwischenraum des Hohlraumes in axialer Richtung einnehmen, auf der Seite mit dem größeren Durchmesser an der Innenseite des Jochrings 60 innen anliegen sowie einen bestimmten Abstand zur Begrenzungsfläche des Permanentmagneten an der Stelle des größten Durchmessers aufweisen.

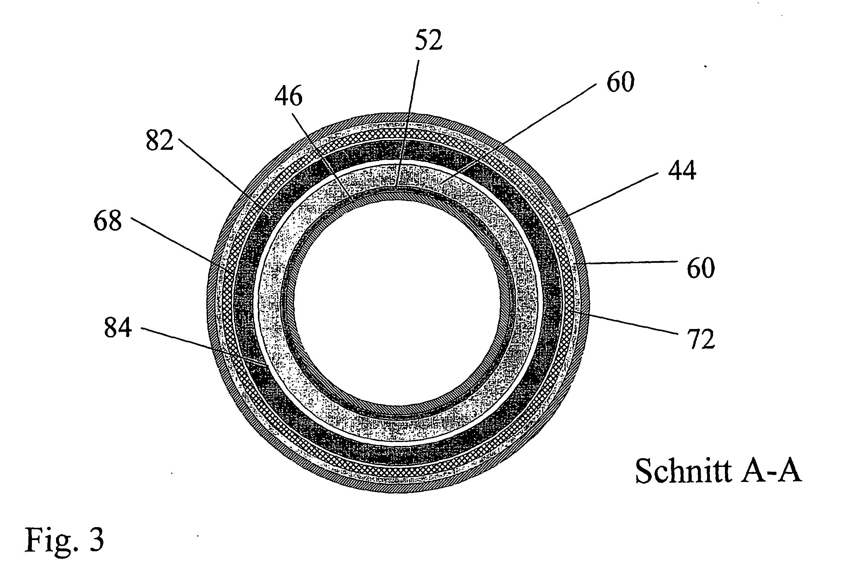

In Fig. 3 ist eine Ansicht auf einen Schnitt durch die Ebene A-A durch den ersten Aktor 13 gezeigt. Die Lage der Ebene A-A ist aus Fig. 2 ersichtlich
Alle dargestellten Bauelemente sind um einen gemeinsamen Mittelpunkt 80 angeordnet, den Schnittpunkt der Symmetrielinie 48 mit der Schnittebene A-A.
Die einzelnen Bauelemente sind in dieser Ansicht im wesentlichen als ringförmige Flächen zwischen dem inneren Rohr 46 und dem äußeren Rohr 44 zu erkennen. Die Breite der einzelnen Ringflächen sind entsprechend der Ausführung der Bauelemente aus der Fig.2 gewählt.

Als äußerster, erste Ring ist das Schnittbild des äußeren Rohrs 44 dargestellt. Es folgen von innen nach außen die Ringflächen von dem Jochring 60, der Spule 72, einem ersten Ringspalt 82, dem Permanentmagnetring 68, einem zweiten Ringspalt 84, wiederum dem Jochring 60, dem Transportrohr 52 sowie dem inneren Rohr 46.

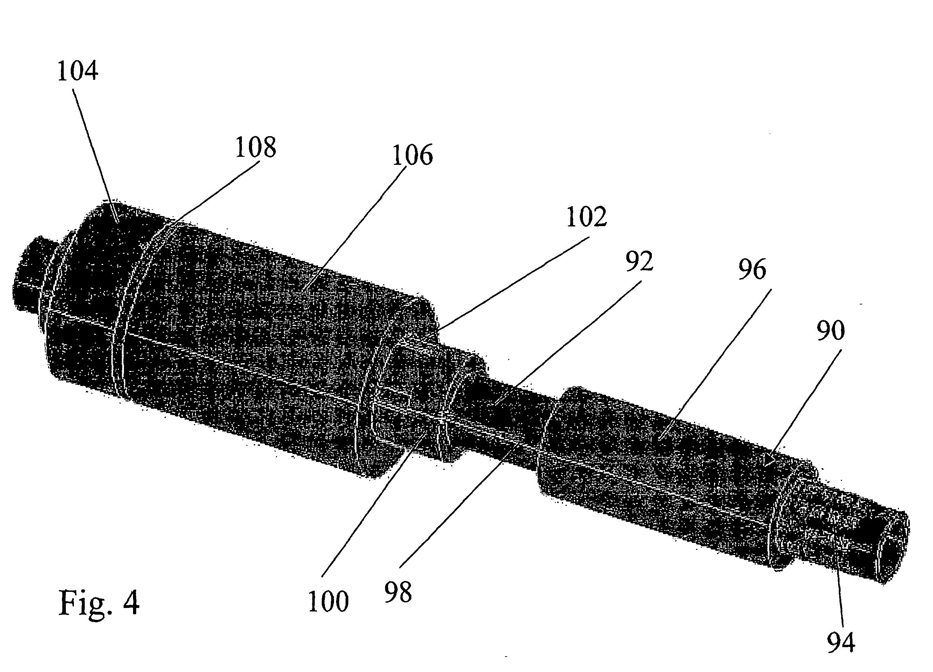

In Fig. 4 ist eine dreidimensionale Ansicht auf eine Ausgestaltung einer erfindungsgemäßen Anordnung dargestellt. Dieses Ausführungsbeispiel der Anordnung ist zur Anwendung in einer Ölquelle gedacht und triebt ein Drosselventil 90 an, das den Durchfluß an Öl durch ein Produktionsrohr 92 begrenzt, das nur im Bereich der Anordnung sowie des Drosselventils dargestellt ist. Das symbolisiert, daß das Produktionsrohr 92 auf beiden Seiten des dargestellten Rohrabschnitts weiterführt, nämlich einerseits in Richtung des Förderstroms zu der Fördereinrichtung der Ölquelle, beispielsweise der Förderplattform, sowie andererseits in Richtung einer weiteren Ölquelle.
Das Produktionsrohr 92 ist an seinem Ende in Richtung Ölquelle mit Ausnehmungen 94 in quadratische Form versehen, die am gesamten Umfang seiner Mantelfläche des Produktionsrohrs 92 verteilt sind. Die Ausnehmungen 94 sind in Reihen entlang der Symmetrieachse des Produktionsrohres 94 angeordnet und ragen noch in den Bereich des Drosselventils hinein, so daß ein Teil der Ausnehmungen 94 verdeckt ist und im Bereich des Endes des Drosselventils die Ausnehmungen 94 teilweise bedeckt sind. Auf diese Weise lassen unverschlossenen Ausnehmungen 94 einen bestimmten Ölfluß von der Umgebung durch die Ausnehmungen 94 ins Innere des Produktionsrohres 92 zu.
Das Drosselventil 90 weist im wesentlichen ein Rohrstück 96 auf, der über dem Produktionsrohr 92 verschiebbar angeordnet ist. Das Rohrstück 96 besitzt eine lichte Weite, die gerade über das Produktionsrohr 92 paßt. Das ermöglicht einerseits die achsparallele Verschiebung des Rohrstücks 96, andererseits verhindert es einen Ölfluß durch die Ausnehmungen 94, die durch das Rohrstück 96 verdeckt sind. Das Rohrstück 96 ist wenigstens so lang gewählt, daß es in der vollständig geschlossenen Stellung des Drosselventils 90 alle Ausnehmungen 94 verdeckt und einen Ölfluß durch die Ausnehmungen 94 verhindert.
Mittels zweier Verbindungselemente 98, von denen eines sichtbar ist, ist das Rohrstück 96 mit einem rohrförmigen Schubkörper 100 verbunden. Jede axiale Verschiebung des Schubkörpers 100 wird mechanisch durch die Verbindungselemente 98 auf das Rohrstück des Drosselventils 90 übertragen. Sechs Haltestrukturelemente 102 sind gleichmäßig über den Umfang des Schubkörpers 100 verteilt, wobei zwei in dieser Ansicht sichtbar sind. Die Haltestrukturelemente 102 sind auf der äußeren Mantelfläche des Schubkörpers 100 abgebracht, weisen eine Breite entsprechend ca. 20 Grad des Umfanges des Schubkörpers 100 auf und sind parallel zur Symmetrieachse des Schubkörpers und beginnen beziehungsweise enden bei einem Abstand zu den Schubkörperenden, der ca. der doppelten Strecke ihrer Breite entspricht.
Die Ansicht auf die Anordnung zeigt außerdem ein Rastenhüllrohr einer Raste 104 sowie ein Hüllrohr 106 für das erste Aktoren 11 usw., die als äußeres Gehäuse rohrförmig ausgestaltet sind, den gleichen Außendurchmesser aufweisen sowie durch Zwischenfügen eines Dichtungselements 108 aneinandergefügt sind. Die gleichen Außendurchmesser sind einem nicht dargestellten Bohrlochrohr, entsprechend angepaßt.

In dem Ringraum zwischen Rastenhüllrohr und dem Schubkörper 100 ist die Raste 104 sowie deren wenigstens ein zweiter Aktor als Antrieb vorgesehen, wobei sich die Raste 104 auf der dem Drosselventil 90 angewendeten Seite des Schubkörpers 100 befindet. Der Schubkörper 100 ragt um den Betrag von ca. einem seiner Außendurchmesser länger als die Summe der Längen von Rastenhüllrohr und Hüllrohr 106 und ist ungefähr mittig um die Raste 104 und den ersten Aktoren des bidirektionalen linearen Magnetantriebs angeordnet, so daß der Schubkörper 100 die beide Stirnflächen des Gesamtkörpers aus der Raste 104 und den ersten Aktoren überragt.

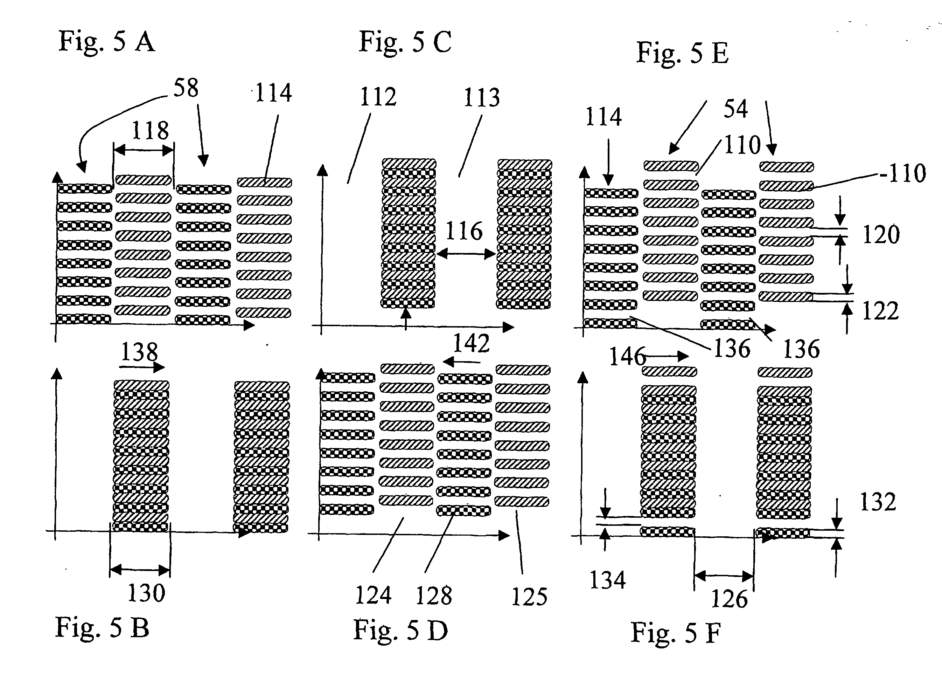

Die nun folgenden Fig. 5A bis Fig.5F zeigen Skizzen, die mit verschiedenen Schritten des erfindungsgemäßen Verfahrens korrespondieren. Sie zeigen in vereinfachter Darstellung in einer ebenen Abwicklung den Schnitt durch die Gegenstruktur des Strukturelements 58 sowie durch die Haltestruktur 54 des Transportrohres 52.
Zur Veranschaulichung ist ein Achsenkreuz auf den Skizzen gezeigt. Dessen kartesische Koordinatenachsen sind so ausgerichtet, daß ein Vektor nach rechts in die x-Achsenrichtung, der radialen Richtung entsprechend, sowie ein Vektor nach oben in die y- Achsenrichtung, der axialen Richtung entsprechend, zeigt.

Bei allen Skizzen weist das Transportrohr 52 auf seiner äußeren Mantelfläche erste Ausnehmungen 110 in x- Achsenrichtung und zweite Ausnehmungen 112 in y- Achsenrichtung auf. Die durch die ersten und zweiten Ausnehmungen 110, 112 geformten Stege 114 ergeben zusammen die Haltestruktur 54. Die zweite Ausnehmungen 112 sind parallel zur Mittelachse des Transportrohrs 52 angeordnet und besitzen die erste Breite 116. Die durch die zweite Ausnehmungen 112 bestimmte zweite Breite 118 sind durch die erste Ausnehmungen 110 gleichmäßig unterteilt, so daß Stege 114 eine rippenartige Form aufweisen, wobei die erste Ausnehmungen 110 zwischen zwei benachbarten Stegen 114 eine fünfte Breite 130 hat, die um einen kleinen Betrag größer ist als die Stegdicke 122 der Stege 114. Ein rippenartiger Steg 114 der Stegdicke 122 könnte sich also gerade in x- Richtung in eine erste Ausnehmungen 110 der Breite BQ hineinbewegen.
In diesem Beispiel sind genau zwei Stegreihen mit jeweils acht solcher rippenartiger Stege 114 gezeigt. Jede der rippenartigen Stege 114 weist abgerundete Kanten, in dieser Ansicht die Ecken der Stege 114, auf. Die erste Breite 116 der zweite Ausnehmungen 112 ist um einen kleinen Betrag größer als die zweite Breite 118 der Stege 114. Ein Objekt der zweiten Breite 118 kann also gerade in einer zweite Ausnehmungen 112 in y - Richtung bewegen.
Das Strukturelement 58 des Ankerringes 62 weist einen gleichartigen Aufbau seiner Gegenstruktur auf, mit gleichen Abmessungen wie die Elemente der Haltestruktur 54 des Transportrohrs 52, wobei zwei Längsnuten 124,125 in y- Richtung die vierte Breite 126 haben, die der ersten Breite 116 entspricht, wobei die Strukturelementstege 128 die fünfte Breite 130 haben, die der zweiten Breite 118 entsprechen, wobei die Strukturelementstege 128 die Strukturelementstegdicke 132 haben, die der Stegdicke 122 entspricht, und wobei eine Quernute 136 eine sechste Breite 134 aufweist, die dementsprechend gleich mit der dritten Breite 120 ist. Je Stegreihe acht Stege 114 beziehungsweise Strukturelementstege 128 dargestellt. Zur besseren Unterscheidung zwischen den Stegen 114 und den Strukturelementstegen 128 sind die Schnittflächen der Strukturelementstege 128 homogen dunkel dargestellt.

Die Fig. 5 A dient als Ausgangsposition zur Beschreibung des Verfahren.
Die Darstellung des Strukturelements 58 beginnt im Nullpunkt des Koordinatensystems derart, daß eine Reihe der Strukturelementstege 128 mit ihren jeweils linken Begrenzungen die y- Achse sowie der unterste der Strukturelementstege 128 mit seiner unteren Begrenzung die x- Achse gerade berührt, wobei die längeren Seiten der Strukturelementstege 128 parallel zur x Achse sind.
Die der y- Achse nähere Reihe von Stegen 114 ist mittig in der Längsnut 124 zwischen den beiden Reihen der Strukturelementstege 128 angeordnet. Die Stege 114 sowie die Strukturelementstege 128 sind in y- Richtung gesehen so gegeneinander versetzt, daß die Strukturelementstege 128 genau in Höhe der ersten Ausnehmungen 110 sind. Die zwei der Stege 114, die am nähesten zur x Achse sind, beginnen gerade in einer Entfernung von einer dritten Breite 120 zur x- Achse in positiver y-Richtung versetzt.

Erfindungsgemäß wird der Ankerring und damit die Gegenstruktur um einen bestimmten Winkel, beispielsweise um 5°, um seine Achse gedreht. Diese Richtung soll die positive Drehrichtung sein. In der gezeigten Abwicklungsansicht entspricht diese Drehung einer Verschiebung der Gegenstruktur des Ankerrings um einen bestimmten Betrag in positiver x- Achsenrichtung, also der radialen Richtung.

Die Fig. 5 B zeigt das Ergebnis der beschrieben Verschiebung, die als erster Bewegungspfeil 138 dargestellt ist. Die Strukturelementstege 128 stehen vollständig im Eingriff zwischen den Stegen 114, also genau jeweils in einer der ersten Ausnehmungen 110. Nur die zwei der Strukturelementstege 128, die am nähesten zur x-Achse sind, grenzen an keinen Steg 114 auf Ihrer Seite, die zur x- Achse weist. Durch diese erfindungsgemäße Anordnung ist eine Art Verzahnung geschaffen, bei der in dieser Position das Strukturelement 58 sowie die Haltestruktur 54 so ineinandergreifen, daß axiale Kräfte, also in y- Achsenrichtung wirkende Kräfte, von dem Strukturelement 58 auf die Haltestruktur oder umgekehrt übertragen werden. Die Längsnuten 124, 125 sind vollständig frei von Stegen 114.

Nun wird das Strukturelement 58 gemäß dem erfindungsgemäßen Verfahren vom bidirektionale linearen Magnetantrieb um einen Bewegungsschritt in y- Achsenrichtung bewegt. Damit wird letztlich auch der Schubkörper, hier im Beispiel das Transportrohr 52 in Richtung der y - Achse bewegt.

Die Fig. 5C zeigt die Position von Strukturelement 58 und Haltestruktur 54 nach diesem Bewegungsschritt, der als zweiter Bewegungspfeil 140 dargestellt ist. Das Strukturelement 58 ist um die Summe aus der dritten Breite 120 sowie der Stegdicke 122 bewegt worden. Die mit dem Strukturelement 58 im Eingriff stehende Haltestruktur 54 ist demgemäß ebenfalls um den gleichen Betrag mit bewegt worden. Entsprechend vergrößert hat sich damit auch der Abstand zwischen der x- Achse und den untersten der Stege 114.

Verfahrensgemäß wird die erreichte axiale Position der Haltestruktur 54 nun durch wenigstens eine Raste gesichert, unter der auch eine Sperrvorrichtung, ein Riegel und eine ähnliche Vorrichtung verstanden werden kann, die jedenfalls verhindert, daß die einmal erreichte Position in y- Richtung verlassen wird, und die so mit der Haltestruktur 54 oder dem Schubkörper, also in dem gewählten Beispiel dem Transportrohr 52, verbunden ist, daß die Kräfte, welche die Haltestruktur 54 in die Ausgangsposition zurückstellen würden, an die Raste weitergeleitet sind. Die Raste kann diese eingeleiteten Kräfte an beispielsweise das äußere Rohr 44 und / oder das innere Rohr 46 weiterleiten und sich sozusagen dort abstützen. Die Raste oder Sperrvorrichtung ist in dieser Fig. jedoch nicht gezeigt.
Die Haltestruktur 54 trägt also eventuell vorhandene Rückstellkräfte über der Raste ab und kann nicht wieder in die vorherige Position zurück bewegt werden.

In dem nun folgenden Verfahrensschritt wird das Strukturelement 58 um den bestimmten Winkel zurück, also beispielsweise um die 5°in die negative Drehrichtung gedreht.

Die Fig. 5D zeigt die Lage der Stege 114 sowie der Strukturelementstege 128 nach diesem Zurückdrehen, das durch den dritten Bewegungspfeil 142 dargestellt ist. Die Gegenstruktur ist in Richtung der x- Achse genau in seine Ausgangsposition zurück bewegt, also berühren die Strukturelementstege 128 der linke Reihe gerade mit ihren äußersten linken Rändern die y- Achse. Die Lage der Strukturelementstege 128 in -y- Richtung ist wie in Figur 5C. Insgesamt befindet sich das Strukturelement 58 wiederum in den Längsnuten der Haltestruktur 54 und ist damit frei bewegbar in Richtung der Längsnut, also der y- Richtung. Die Position der Haltestruktur 54 ist unverändert so, wie in Fig. 5C beschrieben.

Da das Strukturelement 58 sowie die Haltestruktur 54 jetzt Ineinandergreifen wieder gelöst haben, wird das Strukturelement durch den Ankerring des bidirektionalen linearen Magnetantriebs in den Längsnuten der Haltestruktur 54 nach unten, also in negative y- Richtung bewegt, bis in deren Ausgangsposition gemäß Fig. 5A erreicht ist.

In Fig. 5E zeigt die Position des Strukturelements 58 sowie der Haltestruktur 54, wobei der soeben beschriebenen Verfahrensschritt durch einen vierten Bewegungspfeil 144 angedeutet ist. Das Strukturelement 58 ist in seiner Ausgangsposition, wie in Fig. 5A beschrieben, und damit wieder in der Position, in der das Verfahren wieder mit seinem ersten Verfahrensschritt beginnen kann. Die Haltestruktur 54 ist im Vergleich zur der in Fig. 5A beschrieben Position um genau die eine Stegdicke 122 sowie einer dritten Breite 120 in positiver y- Achsenrichtung verschoben im Vergleich zu dessen Ausgangsposition gemäß Fig. 5A. Dieses Maß entspricht genau der Länge eines Bewegungsschrittes des bidirektionalen linearen Magnetantriebes.
Die Strukturelementstege 128 sowie die Stege 114 sind demnach wiederum so gegeneinander versetzt, daß sich die Stege 114 genau in Höhe der Quernuten 136 befinden.

Erfindungsgemäß kann nun wiederum die Drehbewegung um den bestimmten Winkel erfolgen. Das Strukturelement 58 dreht verfahrensgemäß in die Haltestruktur 54 ein. Beide Strukturen stehen damit wieder im Eingriff.

In Fig. 5F wird die Position des Strukturelements 58 sowie der Haltestruktur 54 nach dem eben beschriebenen Bewegungsschritt, der durch einen fünften Bewegungspfeil 146 angedeutet ist. Im wesentlichen gleicht die Skizze daher der Fig. 5B allerdings mit dem Unterschied, daß die Haltestruktur 54 um die Länge eines Bewegungsschrittes nach oben, in y- Achsenrichtung versetzt ist.

Bei jedem Durchlauf aller Arbeitsschritte des Verfahrens rückt die Haltestruktur 54 und damit der Schubkörper, um genau einen Bewegungsschritt in y- Achsenrichtung vor, solange bis beispielsweise eine zuvor bestimmte Anzahl von Zyklen des Verfahrens durchlaufen sind und daher der Schubkörper um genau die Länge, die dem Maß von der bestimmten Anzahl von Bewegungsschritten entspricht, verschoben ist. Beispielsweise zählt ein Schrittzähler jeden Zyklus des Verfahrens und beendet den Vorschub nach einer vorgegebenen Schritt- bzw. Zyklenzahl.

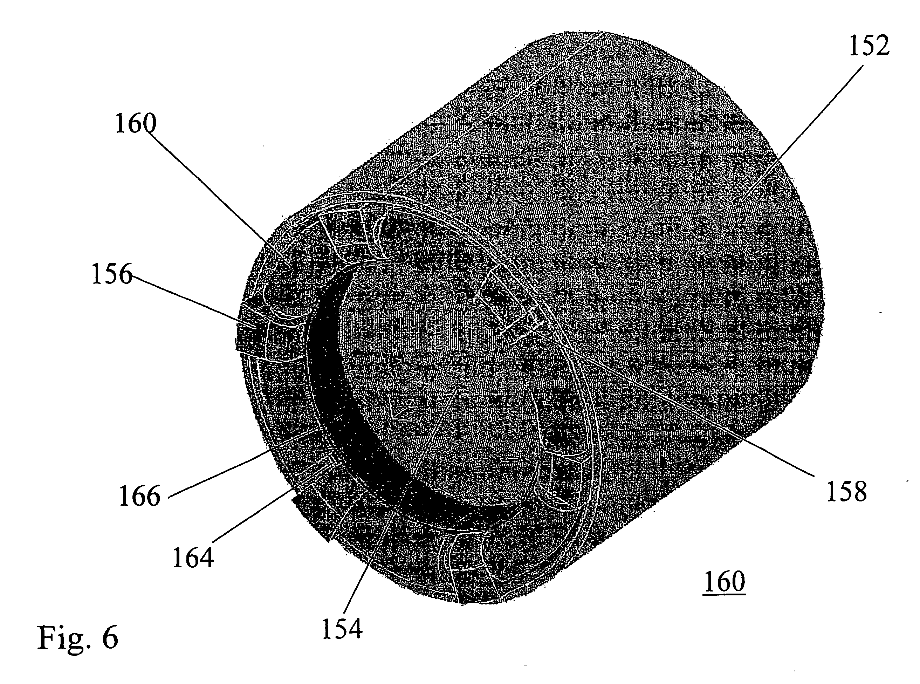

In Fig. 6 ist eine dreidimensionale Ansicht auf einen zweiten Aktor eines Rastenelements 150, schräg in ein kreisförmiges Rohrabschnittsende 154 eines äußeren Rohrabschnitts 152 gezeigt, wobei dieser das Rastenelement 150 in seiner radialen Ausdehnung als Umhüllung begrenzt.. Am sichtbaren Rohrabschnittsende 154 sind sechs Abstützelemente 156 einer äußeren Abstützung, gleichmäßig über den Umfang des Rohrabschnittsendes 150 verteilt. Diese Abstützelemente 156 weisen eine Breite von ca. 20° des Kreisbogens auf und sind in ihrem äußeren Radius auf den lichten Durchmesser des äußeren Rohrabschnittes 152 begrenzt und befinden sich mit ca. einer Hälfte ihrer Länge, d.h. ihrer Ausdehnung in axialer Richtung des äußeren Rohrabschnitts 152, innerhalb des äußeren Rohrabschnitts 152. Die andere Hälfte steht über die gedachte Stirnfläche des äußeren Rohrabschnitts 152 vor. Ungefähr mittig in den Seitenteilen der Abstützelemente 156 sind Ausnehmungen angebracht, die so angeordnet sind, daß ein ringförmiger Magnetkern 158 durch jede der Ausnehmungen durchgreift, und damit die Abstützelemente 156 auf dem Magnetkern 158 gleichmäßig verteilt sind. Im Zwischenraum zwischen jeweils zwei benachbarten Abstützelementen 156 ist auf dem dort vorhanden Teilbereich des Magnetkerns 158 jeweils eine rohrbogenförmige Spule 160 angeordnet, die in dieser Ansicht an die linke Seite des Rechten der benachbarten Abstützelemente 156 berührt sowie bis auf einen Abstand von ca. 5° des Kreisbogens an den Linken der benachbarten Abstützelemente heranreicht. Genau um diese 5° können die Spulen, die zusammen mit dem Magnetkern 158 einen magnetischen Antrieb bilden, die auf dem Magnetkern 158 befindlichen Abstützelemente 156 mit bewegen.
Die Abstützelemente 156 weisen weiterhin jeweils eine äußere Abstützfläche 162 auf, die plan ist, am äußeren radialen Bereich des Abstützelements 156 beginnt sowie auf der dem äußeren Rohrabschnitt 152 abgewandten Seite angeordnet ist.
Auf der dem äußeren Rohranschnitt 152 zugewandten Seite der Abstützelemente 156, damit aufgrund der Position derselben bereits im Innern des äußeren Rohranschnitts 152 befindlich, ist jeweils eine innere Abstützfläche 164 angeordnet, die plan ist sowie mit der Stirnfläche einer Mutter 166 in Berührung steht. Die Mutter 166 weist ein Innengewinde auf, das parallel zur axialen Richtung des äußeren Rohrabschnitts 152 verlaufende Längsnuten aufweist, und das es dadurch ermöglicht, einen Schubkörper dort einzuschrauben, aber auch dieses Rastenelement 150 zur Durchführung des erfindungsgemäßen Verfahrens zu verwenden.

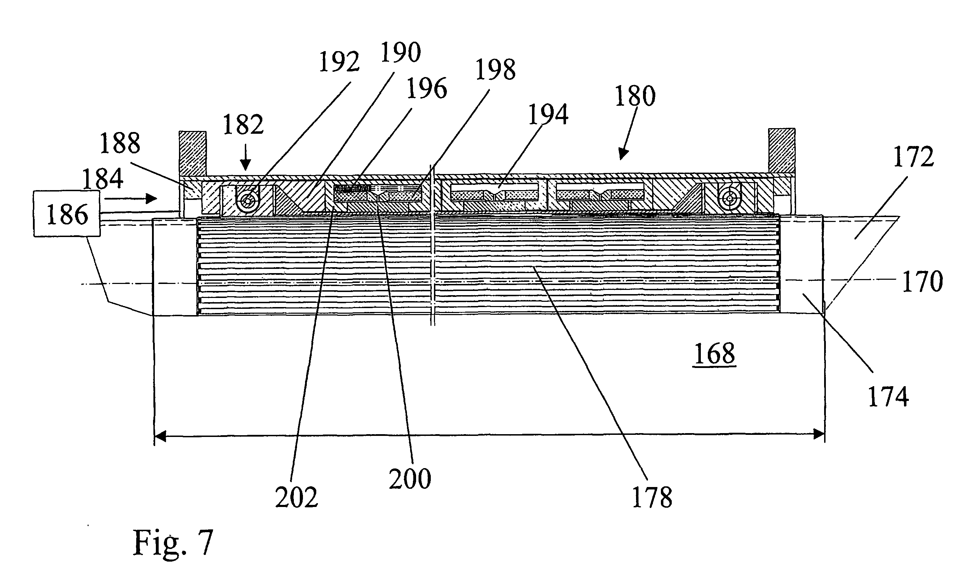

Die Fig. 7 zeigt die Ansicht auf einen Längsschnitt durch eine beispielhafte erfindungsgemäße Anordnung 168 eines bidirektionalen Magnetantriebs. In dieser Ansicht ist eine Symmetrielinie 170 zu erkennen, welche diese Ansicht in zwei Hälften unterteilt, von denen eine Hälfte vollständig gezeigt ist. Ausgehend von der Symmetrielinie 170 ist um ein Rohr 172 ein Gewinderohr 174 einer ersten Länge 176 angeordnet. Im Abstand von ca. der Hälfte des Radius des Gewinderohrs 174 von dessen Rändern beginnend, weist das Gewinderohr 174 eine Oberflächenstruktur 178 auf, die in paralleler Richtung zur Symmetrielinie 170 verlaufenden Ausnehmungen, die dargestellt sind, sowie gewindeförmigen Ausnehmungen haben, die zwecks Übersichtlichkeit nicht dargestellt sind.
Um das Gewinderohr 174 ist ein erfindungsgemäßer Antrieb 180 angeordnet, der im wesentlichen einen in einem zirkumferalen Ringraum zwischen einem rohrförmigen, äußeren Gehäuse 182 sowie dem Gewinderohr 174 angeordnet ist. Der Aufbau des Antriebs 180 ist symmetrisch von den Stirnflächen des Äußeren Gehäuses 182 aus gesehen. Von einer Stirnfläche 184 aus gesehen wird der Ringspalt zwischen äußerem Gehäuse 182 und dem Gewinderohr 174 durch einen ringförmigen Deckel 186 nahezu vollständig verschlossen. An der Berührstelle zwischen dem Deckel 186 sowie dem äußern Gehäuse 182 ist ein Abstützring 188 angeordnet. Der symmetrisch angeordnete zweite Abstützring auf der anderen Symmetrieseite des Antriebs 180 ist als Spannring ausgebildet, um die zwischen den beiden Abstützringen befindlichen Bauelemente zusammen zu spannen.
Den Abstützring 188 berührend ist ein Verbindungselement 190 angeordnet, das in dieser Ansicht in wesentlichen u- förmig ist, wobei die offene Seite zum Gewinderohr 174 zugewandt ist. Auf der Innenseite des dem Abstützring zugewandten Schenkels des Verbindungselements ist ein Sperrenelement 192 angeordnet, das als Raste für eine Bewegungsrichtung des Gewinderohrs 174 dient, beispielsweise als Rücklaufsperre. Das symmetrisch vorhandene zweite Sperrenelement ist als Raste für die entgegengesetzte Bewegungsrichtung des Gewinderohrs 174 vorgesehen, demgemäß im Beispiel als Vorlaufsperre. Im wesentlichen entspricht der Aufbau des Sperrenelements 192 sowie des zweiten Sperrenelements der Spule 160 auf dem Magnetkern 158 aus Fig.6.
Auf der Außenseite des dem Abstützring 188 abgewandten Schenkels des Verbindungselements 190 schließt ein Aktorenbauteil 194 an. In Kenntnis des prinzipiellen Aufbaus des Aktors11 gemäß Fig. 2 sind dessen Einzelelemente in dem Aktorenbauteil 194 funktional wieder zu erkennen, ein Spulenelement 196 entspricht einem der Spulen 72 bis 75, ein Permanentmagnetelement 198 entspricht einem Permanentmagnetring 68 oder 69, ein Ankerelement 200 entspricht dem Ankerring 62 und ein Jochelement 202 entspricht dem Jochring 60.

### Bezugszeichenliste

- α: Winkel
- 10: Luftspaltbereich
- 11, 12, 13,14: erste Aktoren

- 20: Joch
- 22: Anker
- 24: Luftspalt
- 26: Materialdicke
- 28, 30: Oberseiten
- 32, 34: Unterseiten
- 36: konstanter Abstand
- 38: Seitenlängen
- 40: Länge
- 42: maximaler Schubweg
- 44: äußeres Rohr
- 46: inneres Rohr
- 48: Symmetrielinie
- 50: Außendurchmesser
- 52: Transportrohr
- 54: Haltestruktur
- 56: Quernut
- 58: Strukturelement
- 60: Jochring
- 62: Ankerring
- 64; 65: Spalte
- 66, 67: Formteile
- 68, 69: Permanentmagnetringe
- 72, 73, 74, 75: Spulen
- 80: Mittelpunkt
- 82: erster Ringspalt
- 84: zweiter Ringspalt
- 90: Drosselventil
- 92: Produktionsrohr
- 94: Ausnehmung
- 96: Rohrstück
- 98: Verbindungselement
- 100: Schubkörper
- 102: Haltestrukturelement
- 104: Raste
- 106: Hüllrohr
- 108: Dichtungselement
- 110: erste Ausnehmungen
- 112, 113: zweite Ausnehmungen
- 114: Stege
- 116: erste Breite
- 118: zweite Breite
- 120: dritte Breite
- 122: Stegdicke
- 124, 125: Längsnuten
- 126: vierte Breite
- 128: Strukturelementstege
- 130: fünfte Breite
- 132: Strukturelementstegdicke
- 134: sechste Breite
- 136: Quernuten
- 138: erster Bewegungspfeil
- 140: zweiter Bewegungspfeil
- 142: dritter Bewegungspfeil
- 144: vierter Bewegungspfeil
- 146: fünfter Bewegungspfeil
- 150: Rastenelement
- 152: äußeres Rohrabschnitt
- 154: Rohrabschnittsende
- 156: Abstützelemente
- 158: Magnetkern
- 160: Spule
- 162: äußere Abstützfläche
- 164.: innere Abstützfläche
- 166: Mutter
- 168: beispielhafte Anordnung
- 170: Symmetrielinie
- 172: Rohr
- 174: Gewinderohr
- 176: erste Länge
- 178: Oberflächenstruktur
- 180: bidirektionaler Antrieb
- 182: äußeres Gehäuse
- 184: Stirnfläche
- 186: Deckel
- 188: Abstützring
- 190: Verbindungselement
- 192: Sperrenelement
- 194: Aktorenbauteil
- 196: Spulenelement
- 198: Permanentmagnetelement
- 200: Ankerelement
- 202: Jochelement

## Patentansprüche

1. Verfahren zum Antrieb eines Schubkörpers (100) mittels eines bidirektionalen linearen Magnetantriebes (180) mit wenigstens je einem ersten (11, 12, 13, 14) und einem zweiten Aktor, wobei der wenigstens eine erste Aktor (11, 12, 13, 14) mit wenigstens einer Spule (72, 73, 74, 75) und einem Joch (20, 60) versehen ist und mit wenigstens einem Ankerring (22, 62) zusammenarbeitet, **dadurch gekennzeichnet, daß** der Ankerring (22, 62) Schubkörper (100) alternierend beaufschlagt indem der Schubkörper (100) von dem wenigstens einen Ankerring (22, 62), der von dem hieran angreifenden wenigstens einen zweiten Aktor gedreht wird, axial verschoben wird und anschließend örtlich fixiert wird, wobei der Schubkörper (100) auf diese Weise schrittweise soweit verschoben wird, bis dieser seine jeweilige Endposition erreicht hat.

2. Verfahren nach Anspruch 1, **dadurch gekennzeichnet, daß** der Ankerring (22, 62) oder der wenigstens eine zweite Aktor mit einer Rastvorrichtung (104) derart zusammenarbeitet, daß der Schubkörper (100) wenigstens dann durch die Rastvorrichtung (104) örtlich fixiert wird, wenn der Ankerring (22, 62) den Schubkörper (100) nicht beaufschlagt.

3. Verfahren nach Anspruch 1 oder 2, **dadurch gekennzeichnet, daß** die Rastvorrichtung (104) wenigstens eine Drehbewegung ausführt, um den Schubkörper (100) zeitweise örtlich zu fixieren.

4. Verfahren nach einem der vorgenannten Ansprüche, **dadurch gekennzeichnet, daß** die Rastvorrichtung (104) durch wenigstens einen dritten Aktor bewegt wird.

5. Verfahren nach einem der vorgenannten Ansprüche, **dadurch gekennzeichnet, daß** der Schubkörper (100) von dem wenigstens einen ersten Aktor (11, 12, 13, 14) formschlüssig beaufschlagt wird.

6. Verfahren nach einem der vorgenannten Ansprüche, **dadurch gekennzeichnet, daß** der wenigstens eine Ankerring (22, 62) mit dem Schubkörper (100) zusammenarbeitet, indem der wenigstens eine Ankerring (22, 62) in eine Drehrichtung um die Längsachse gedreht wird, und daß die Rastvorrichtung (104) eine Verrastung herbeiführt, welche den Schubkörper (100) jeweils solange lagefixiert, bis der wenigstens eine erste Aktor (11, 12, 13, 14) erneut den Schubkörper (100) beaufschlagt.

7. Verfahren nach einem der vorgenannten Ansprüche, **dadurch gekennzeichnet, daß** der wenigstens eine Ankerring (22, 62) mit dem Schubkörper (100) zusammenarbeitet, indem der wenigstens eine Ankerring (22, 62) alternierend in die Drehrichtungen um die Längsachse gedreht wird, und daß die Rastvorrichtung (104) eine Verrastung herbeiführt, welche den Schubkörper (100) jeweils solange lagefixiert, bis der wenigstens eine erste Aktor (11, 12, 13, 14) erneut den Schubkörper (100) beaufschlagt.

8. Verfahren nach einem der vorgenannten Ansprüche, **dadurch gekennzeichnet, daß** das schrittweise Verschieben des Schubkörpers (100) dann beendet wird, wenn eine bestimmte Anzahl von Verschiebeschritten erreicht oder wenn durch ein Signal die Abschaltung bewirkt wird.

9. Anordnung zur Durchführung des Verfahren zum Antrieb eines Schubkörpers (100) durch einen bidirektionalen linearen Magnetantrieb (180) gemäß einem der vorgenannten Ansprüche, wobei der bidirektionale lineare Magnetantrieb (180) wenigstens je einen ersten (11, 12, 13, 14) und einen zweiten Aktor aufweist, wobei der wenigstens eine erste Aktor (11, 12, 13, 14) wenigstens ein Joch (20, 60), wenigstens eine Spule (72, 73, 74, 75) sowie wenigstens einen Ankerring (22, 62) hat und zur im wesentlichen axialen Bewegung des Schubkörpers (100) vorgesehen ist, wobei der Abstand zwischen dem wenigstens einen Joch (20, 60) und dem wenigstens einen Ankerring (22, 62) als aktiver Luftspalt (24, 64, 65) ausbildet ist, **dadurch gekennzeichnet, daß** der wenigstens eine Ankerring (22, 62) zur Zusammenarbeit mit dem Schubkörper (100) vorgesehen ist, der wenigstens zweite Aktor wenigstens zur Drehung des wenigstens einen Ankerrings (22, 62) vorgesehen ist, und eine Rastvorrichtung (104, 192) zur zeitweisen Fixierung des Schubkörpers (100) vorgesehen ist.

10. Anordnung gemäß Anspruch 9, **dadurch gekennzeichnet, daß** der wenigstens eine erste Aktor (11, 12, 13, 14) wenigstens zwei Permanentmagnete (68, 69, 198) aufweist, wobei die Permanentmagnete (68, 69, 198) die instabile magnetische Einspannung des wenigstens einen Ankerrings (22, 62) bewirken.

11. Anordnung gemäß einem der Ansprüche 9 oder 10, **dadurch gekennzeichnet, daß** die Oberfläche des Schubkörpers (100) im Bereich der dem wenigstens einen Ankerring (22, 62) zugewandten Fläche zumindest teilweise mit einer Haltestruktur (54) versehen ist, und daß der wenigstens eine Ankerring (22, 62) an der dem Schubkörper zugewandten Fläche mit einer zur Haltestruktur (54) kompatiblen Gegenstruktur versehen ist, die sich durch Verdrehen um die Längsachse des Ankerringes (22, 62, 200) in die Haltestruktur (54) einfügt.

12. Anordnung gemäß einem der Ansprüche 9 bis 11, **dadurch gekennzeichnet, daß** der Schubkörper (100) eine zylindrische oder stößelartige Grundform aufweist.

13. Anordnung gemäß einem der Ansprüche 9 bis 12, **dadurch gekennzeichnet, daß** der Schubkörper (100) ein ringförmige oder rohrförmige Grundform aufweist ist.

14. Anordnung gemäß einem der Ansprüche 11 bis 13, **dadurch gekennzeichnet, daß** die Haltestruktur (54) erste Ausnehmungen in achsparalleler Richtung des Schubkörpers (100) aufweist, die eine entsprechende Bewegung des wenigstens einen Ankerrings (22, 62, 200) ermöglichen, und daß die Haltestruktur (54) zweite Ausnehmungen in radialer Richtung des Schubkörpers (100) aufweist, die eine entsprechende Drehbewegung des wenigstens einen Ankerrings (22, 62, 200) ermöglichen.

15. Anordnung gemäß einem der Ansprüche 11 bis 14, **dadurch gekennzeichnet, daß** die Haltestruktur (54) Ausnehmungen aufweist, die im wesentlichen wendelförmig sind, die eine kombinierte axial - radiale Bewegung des Ankerrings (22, 62, 200) ermöglichen.

16. Anordnung gemäß einem der Ansprüche 11 bis 15, **dadurch gekennzeichnet, daß** die Ausnehmungen Nuten, Schlitze oder gewindeartig sind.

17. Anordnung gemäß einem der Ansprüche 11 bis 16, **dadurch gekennzeichnet, daß** wenigstens die Haltestruktur (54) aus Edelstahl gefertigt ist.

18. Anordnung gemäß einem der Ansprüche 11 bis 17, **dadurch gekennzeichnet, daß** die Gegenstruktur so auf die Haltestruktur (54) angepaßt ist, daß sie in deren Ausnehmungen die radial oder wendelförmig am Schubkörper (100) vorgesehen sind durch eine im wesentlichen radiale Bewegung der Gegenstruktur oder der Haltestruktur (54) eingreifen.

19. Anordnung gemäß einem der Ansprüche 11 bis 18, **dadurch gekennzeichnet, daß** die Gegenstruktur, insbesondere durch parallel zu Längsachse verlaufende Ausnehmungen oder Nute, so gestaltet ist, daß eine der Schubkörperachse im wesentlichen parallel verlaufende Bewegung von der Gegenstruktur in der Haltestruktur (54) ermöglicht ist.

20. Anordnung gemäß einem der Ansprüche 11 bis 19, **dadurch gekennzeichnet, daß** die Gegenstruktur mit dem wenigstens einen Ankerring (22, 62, 200) fest verbunden oder an diesem angeformt ist.

21. Anordnung gemäß einem der Ansprüche 11 bis 20, **dadurch gekennzeichnet, daß** die Gegenstruktur aus Edelstahl gefertigt ist.

22. Anordnung gemäß einem der Ansprüche 11 bis 21, **dadurch gekennzeichnet, daß** die Gegenstruktur eine entsprechend bearbeitete Mutter (166) oder Reversiermutter ist.

23. Anordnung gemäß einem der Ansprüche 11 bis 22, **dadurch gekennzeichnet, daß** die Haltestruktur (54) sowie die Gegenstruktur radial zwischen dem wenigstens einen Ankerring (22, 62, 200) und dem Schubkörper (100) vorgesehen sind.

24. Anordnung gemäß einem der Ansprüche 11 bis 23, **dadurch gekennzeichnet, daß** die Haltestruktur (54) sowie die Gegenstruktur wenigstens teilweise außerhalb des Abschnitts der Längsachse vorgesehen sind, in dem der wenigstens eine Ankerring (22, 62, 200) vorgesehen ist.

25. Anordnung gemäß einem der Ansprüche 11 bis 24, **dadurch gekennzeichnet, daß**, wenigstens zwei erste Aktoren (11, 12, 13, 14) mit je einem Ankerring (22, 62, 200) vorgesehen sind, die so angeordnet sind, daß sie gemeinsam Kräfte auf den Schubkörper (100) übertragen oder von diesem aufnehmen.

26. Anordnung gemäß einem der Ansprüche 11 bis 25, **dadurch gekennzeichnet, daß** der bidirektionale lineare Magnetantrieb (180), der wenigstens eine zweite Aktor, der Schubkörper (100) sowie die Rastvorrichtung (104, 150) in dem Ringraum zwischen einem äußeren Rohr (44) und einem inneren Rohr (46, 92) vorhanden sind.

27. Anordnung gemäß einem der Ansprüche 11 bis 26, **dadurch gekennzeichnet, daß** die Rastvorrichtung (104, 150) an wenigstens einen Ankerring (22, 62, 200) gekoppelt ist und dessen Drehbewegungen entsprechend folgt oder dessen Drehbewegung als Antrieb nutzt.

28. Anordnung gemäß einem der Ansprüche 11 bis 27, **dadurch gekennzeichnet, daß** die Rastvorrichtung (104, 150) an den wenigstens einen zweiten Aktor gekoppelt ist und dessen Drehbewegungen entsprechend folgt oder dessen Drehbewegung als Antrieb nutzt.

29. Anordnung gemäß einem der Ansprüche 11 bis 28, **dadurch gekennzeichnet, daß** die Rastvorrichtung (104, 150) wenigstens einen dritten Aktor als Antrieb aufweist.

30. Anordnung gemäß einem der Ansprüche 11 bis 29, **dadurch gekennzeichnet, daß** wenigstens ein Schrittzähler zur Messung der einzelnen Vorwärts- und Rückwärtsschritte und gegebenenfalls zur Anzeige der Position des Schubkörpers (100) vorgesehen ist.

31. Anordnung gemäß einem der Ansprüche 11 bis 30, **dadurch gekennzeichnet, daß** ein linearer Wegaufnehmer zur Messung und gegebenenfalls Anzeige der Position des Schubkörpers (100) vorgesehen ist.

32. Anordnung gemäß einem der Ansprüche 11 bis 31, **dadurch gekennzeichnet, daß** ein Signal des Schrittzählers, des linearen Wegaufnehmers oder eines Endschalters zur Beendung der axialen Bewegung des Schubkörpers (100) vorgesehen ist.

33. Anordnung gemäß einem der Ansprüche 11 bis 32, **dadurch gekennzeichnet, daß** wenigstens ein Netzgerät zur Stromversorgung aller oder einzelner Stromverbraucher vorgesehen ist.

34. Anordnung gemäß einem der Ansprüche 11 bis 33, **dadurch gekennzeichnet, daß** der wenigstens eine erste Aktor (11, 12, 13, 14) gegen die Umgebungsbedingungen gekapselt ist.

35. Anordnung gemäß Anspruch 34, **dadurch gekennzeichnet, daß** die Kapselung eine bewegliche Dichtungswand aufweist, die entweder näherungsweise starr ist, sich aber entlang einer Führung bewegen oder gleiten kann, oder flexibel oder dehnbar ist, bis ein Druckausgleich zwischen dem Innern der Kapselung und Umgebung hergestellt ist.

36. Anordnung gemäß Anspruch 35, **dadurch gekennzeichnet, daß** die Abdichtung der Dichtwand gegen den Aktor oder den Schubkörper durch eine schleifende Dichtung erreicht ist.

37. Anordnung gemäß einem der Ansprüche 11 bis 36, **dadurch gekennzeichnet, daß** der Raum innerhalb der Kapselung mit einem flüssigen Medium gefüllt ist

38. Anordnung gemäß Anspruch 37, **dadurch gekennzeichnet, daß** das flüssige Medium hochtemperaturbeständiges Öl ist.

39. Anordnung gemäß einem der Ansprüche 11 bis 38, **dadurch gekennzeichnet, daß** als hartmagnetisches Material der Permanentmagnete (68, 69, 198) im bidirektionalen linearen Magnetantrieb (180) AlNiCo verwendet ist.

40. Anordnung gemäß Anspruch 39, **dadurch gekennzeichnet, daß** das hartmagnetische Material Curie- Temperaturen von wenigstens 600° C aufweist.

41. Anordnung gemäß einem der Ansprüche 11 bis 40, **dadurch gekennzeichnet, daß** als weichmagnetisches Material für den wenigstens einen Ankerring (22, 62, 200) sowie das wenigstens eine Joch aus RNil2 verwendet ist.

42. Anordnung gemäß einem der Ansprüche 11 bis 41, **dadurch gekennzeichnet, daß** eine Steuerungseinrichtung zur Koordination der Verfahrensschritte vorhanden ist.

43. Anordnung gemäß einem der Ansprüche 11 bis 42, **dadurch gekennzeichnet, daß** beim bidirektionalen linearen Magnetantrieb (180) über dessen gesamte axiale Ausdehnung ein erster Versorgungsbereich vorgesehen ist, durch den insbesondere Leitungen von einer einen axialen Seite zu einer zweiten axialen Seite des bidirektionalen linearen Magnetantriebs (180) durchführbar sind.

44. Anordnung gemäß einem der Ansprüche 11 bis 43, **dadurch gekennzeichnet, daß** der erste Versorgungsbereich eine hohlzylinderteilförmiger Ausnehmung aus dem bidirektionalen linearen Magnetantrieb (180) ist.

45. Anordnung gemäß einem der Ansprüche 11 bis 42, **dadurch gekennzeichnet, daß** das innere Rohr (46) wenigstens im Bereich des bidirektionalen linearen Magnetantriebs (180) nicht-mittig im äußeren Rohr (44) geführt ist, und daß ein zweiter Versorgungsbereich zwischen dem äußeren Durchmesser des bidirektionalen Magnetantriebs (180) sowie dem inneren Durchmesser des äußeren Rohrs (44) vorhanden ist, durch den insbesondere Leitungen von einer axialen Seite zu einer zweiten axialen Seite des bidirektionalen linearen Magnetantriebs (180) durchführbar sind.

## Claims

1. A process for driving a thrust body (100) by means of a bi-directional linear solenoid drive (180) having in each case at least one first (11, 12, 13, 14) and one second actuator, the at least one first actuator (11, 12, 13, 14) being provided with at least one coil (72, 73, 74, 75) and a yoke (20, 60) and cooperating with at least one armature ring (22, 62), **characterised in that** the armature ring (22, 62) acts on the thrust body (100) in alternating manner, whereby the thrust body (100) is axially displaced by the at least one armature ring (26, 62), which is rotated by the at least one second actuator acting on it, and is then locally fixed in position, the thrust body (100) being displaced step-by-step in this manner until it has reached its respective end position.

2. A process according to Claim 1, **characterised in that** the armature ring (22, 62) or the at least one second actuator cooperates with a latching device (104) in such a way that the thrust body (100) is then at least locally fixed in position by the latching device (104) when the armature ring (22, 62) is not acting on the thrust body (100).

3. A process according to Claim 1 or 2, **characterised in that** the latching device (104) executes at least a rotary movement in order to intermittently fix the thrust body (100) in position locally.

4. A process according to one of the preceding claims, **characterised in that** the latching device (104) is moved by at least one third actuator.

5. A process according to one of the preceding claims, **characterised in that** the thrust body (100) is acted upon with form fit by the at least one first actuator (11, 12, 13, 14) .

6. A process according to one of the preceding claims, **characterised in that** the at least one armature ring (22, 62) cooperates with the thrust body (100) whereby the at least one armature ring (22, 62) is rotated about the longitudinal axis in a rotational direction, and **in that** the latching device (104) causes a latching action which fixes the thrust body (100) in position in each case until the at least one first actuator (11, 12, 13, 14) acts on the thrust body (100) again.

7. A process according to one of the preceding claims, **characterised in that** the at least one armature ring (22, 62) cooperates with the thrust body (100) whereby the at least one armature ring (22, 62) is rotated alternately about the longitudinal axis in the rotational directions, and **in that** the latching device (104) causes a latching action which fixes the thrust body (100) in position in each case until the at least one first actuator (11, 12, 13, 14) acts on the thrust body (100) again.

8. A process according to one of the preceding claims, **characterised in that** the step-by-step displacement of the thrust body (100) is terminated when a particular number of displacement steps are achieved or when the switch-off function is effected by a signal.

9. An arrangement for carrying out the process for driving a thrust body (100) by means of a bi-directional linear solenoid drive (180) according to one of the preceding claims, in which the bi-directional linear solenoid drive (180) has in each case at least one first (11, 12, 13, 14) and one second actuator, the at least one first actuator (11, 12, 13, 14) having at least one yoke (20, 60), at least one coil (72, 73, 74, 75) and at least one armature ring (22, 62) and being provided for the substantially axial movement of the thrust body (100), the spacing between the at least one yoke (20, 60) and the at least one armature ring (22, 62) being designed as an active air gap (24, 64, 65), **characterised in that** the at least one armature ring (22, 62) is provided for cooperating with the thrust body (100), the at least second actuator is provided at least for rotating the at least one armature ring (22, 62) and a latching device (104, 192) is provided for intermittently fixing the thrust body (100) in position.

10. An arrangement according to Claim 9, **characterised in that** the at least one first actuator (11, 12, 13, 14) has at least two permanent magnets (68, 69, 198), the permanent magnets (68, 69, 198) magnetically clamping the at least one armature ring (22, 62) in unstable manner.

11. An arrangement according to one of Claims 9 or 10, **characterised in that** the surface of the thrust body (100) in the region of the face facing the at least one armature ring (22, 62) is at least partially provided with a holding structure (54), and **in that** the at least one armature ring (22, 62) is provided on the face facing the thrust body with a counter-structure which is compatible with the holding structure (54) and is inserted into the holding structure (54) by rotation about the longitudinal axis of the armature ring (22, 62, 200).

12. An arrangement according to one of Claims 9 to 11, **characterised in that** the thrust body (100) has the basic shape of a cylinder or plunger.

13. An arrangement according to one of Claims 9 to 12, **characterised in that** the thrust body (100) has the basic shape of a ring or tube.

14. An arrangement according to one of Claims 11 to 13, **characterised in that** the holding structure (54) has first cutouts in the axially parallel direction of the thrust body (100), which enable a corresponding movement of the at least one armature ring (22, 62, 200), and **in that** the holding structure (54) has second cutouts in the radial direction of the thrust body (100) which enable a corresponding rotary movement of the at least one armature ring (22, 62, 200).

15. An arrangement according to one of Claims 11 to 14, **characterised in that** the holding structure (54) has cutouts which are substantially helical and enable a combined axial/radial movement of the armature ring (22, 62, 200).

16. An arrangement according to one of Claims 11 to 15, **characterised in that** the cutouts are grooves, slots or thread-like.

17. An arrangement according to one of Claims 11 to 16, **characterised in that** at least the holding structure (54) is made from special steel.

18. An arrangement according to one of Claims 11 to 17, **characterised in that** the counter-structure is adapted to the holding structure (54) such that it engages in its cutouts, which are provided radially or helically on the thrust body (100), as a result of a substantially radial movement of the counter-structure or the holding structure (54).

19. An arrangement according to one of Claims 11 to 18, **characterised in that**, particularly as a result of cutouts or grooves extending parallel to the longitudinal axis, the counter-structure is fashioned such that it enables a movement of the counter-structure in the holding structure (54) which extends substantially parallel to the thrust-body axis.

20. An arrangement according to one of Claims 11 to 19, **characterised in that** the counter-structure is fixedly connected to the at least one armature ring (22, 62, 200) or is integrally formed thereon.

21. An arrangement according to one of Claims 11 to 20, **characterised in that** the counter-structure is made from special steel.

22. An arrangement according to one of Claims 11 to 21, **characterised in that** the counter-structure is a correspondingly machined nut (166) or reversing nut.

23. An arrangement according to one of Claims 11 to 22, **characterised in that** the holding structure (54) and the counter-structure are provided radially between the at least one armature ring (22, 62, 200) and the thrust body (100).

24. An arrangement according to one of Claims 11 to 23, **characterised in that** the holding structure (54) and the counter-structure are provided at least partially outside the portion of the longitudinal axis in which the at least one armature ring (22, 62, 200) is provided.

25. An arrangement according to one of Claims 11 to 24, **characterised in that** at least two first actuators (11, 12, 13, 14) are provided, which each have an armature ring (22, 62, 200) and are arranged such that they transmit common forces to, or receive them from, the thrust body (100).

26. An arrangement according to one of Claims 11 to 25, **characterised in that** the bi-directional linear solenoid drive (180), the at least one second actuator, the thrust body (100) and the latching device (104, 150) are present in the annular space between an outer tube (44) and an inner tube (46, 92) .

27. An arrangement according to one of Claims 11 to 26, **characterised in that** the latching device (104, 150) is coupled to at least one armature ring (22, 62, 200) and follows its rotary movements accordingly or uses its rotary movement as a drive.

28. An arrangement according to one of Claims 11 to 27, **characterised in that** the latching device (104, 150) is coupled to the at least one second actuator and follows its rotary movements accordingly or uses its rotary movement as a drive.

29. An arrangement according to one of Claims 11 to 28, **characterised in that** the latching device (104, 150) has at least one third actuator as a drive.

30. An arrangement according to one of Claims 11 to 29, **characterised in that** at least one step counter is provided for measuring the individual forward and backward steps and, if required, displaying the position of the thrust body (100).

31. An arrangement according to one of Claims 11 to 30, **characterised in that** a linear distance sensor is provided for measuring and, if required, displaying the position of the thrust body (100).

32. An arrangement according to one of Claims 11 to 31, **characterised in that** a signal of the step counter, of the linear distance sensor or of the end switch is provided for terminating the axial movement of the thrust body (100).

33. An arrangement according to one of Claims 11 to 32, **characterised in that** at least one power supply unit is provided for supplying power to all or individual power consumers.

34. An arrangement according to one of Claims 11 to 33, **characterised in that** the at least one first actuator (11, 12, 13, 14) is enclosed against the environmental conditions.

35. An arrangement according to Claim 34, **characterised in that** the enclosure has a movable sealing wall which is either virtually rigid and yet capable of moving or sliding along a guide, or is flexible or extendible until a pressure compensation is produced between the inside of the enclosure and the environment.

36. An arrangement according to Claim 35, **characterised in that** the sealing function of the sealing wall with respect to the actuator or the thrust body is achieved by a rubbing seal.

37. An arrangement according to one of Claims 11 to 36, **characterised in that** the space within the enclosure is filled with a fluid medium.

38. An arrangement according to Claim 37, **characterised in that** the fluid medium is oil which is resistant to high temperatures.

39. An arrangement according to one of Claims 11 to 38, **characterised in that** AlNiCo is used as a magnetically hard material of the permanent magnets (68, 69, 198) in the bi-directional linear solenoid drive (180).

40. An arrangement according to Claim 39, **characterised in that** the magnetically hard material has Curie temperatures of at least 600° C.

41. An arrangement according to one of Claims 11 to 40, **characterised in that** RNi12 is used as a magnetically soft material for the at least one armature ring (22, 62, 200) and the at least one yoke.

42. An arrangement according to one of Claims 11 to 41, **characterised in that** a control device is present for coordinating the process steps.

43. An arrangement according to one of Claims 11 to 42, **characterised in that**, provided over the entire axial extent of the bi-directional linear solenoid drive (180), there is a first supply region through which it is particularly possible to guide lines from one axial side to a second axial side of the bi-directional linear solenoid drive (180).

44. An arrangement according to one of Claims 11 to 43, **characterised in that** the first supply region is a cutout in the bi-directional linear solenoid drive (180), said cutout being in the shape of a hollow cylindrical part.

45. An arrangement according to one of Claims 11 to 42, **characterised in that** the inner tube (46) is guided non-centrally in the outer tube (44), at least in the region of the bi-directional linear solenoid drive (180), and **in that** a second supply region is present between the outer diameter of the bi-directional solenoid drive (180) and the inner diameter of the outer tube (44) through which it is particularly possible to guide lines from one axial side to a second axial side of the bi-directional linear solenoid drive (180).

## Revendications

1. Procédé d'entraînement d'un corps de poussée (100) au moyen d'une commande magnétique bidirectionnelle linéaire (180), comprenant au moins un premier acteur (11, 12, 13, 14) et un second acteur, le au moins premier acteur (11, 12, 13, 14) étant muni d'au moins une bobine (72, 73, 74, 75) et d'une culasse (20, 60) et coopérant avec au moins un anneau d'induit (22, 62), **caractérisé en ce que** l'anneau d'induit (22, 62) sollicite en alternance le corps de poussée (100), le corps de poussée (100) étant déplacé dans la direction axiale par le au moins anneau d'induit (22, 62), tourné par le au moins second acteur appliqué sur ce dernier, et étant ensuite fixé localement, le corps de poussée (100) étant alors déplacé pas à pas de cette manière jusqu'à ce qu'il ait atteint sa position respective finale.

2. Procédé suivant la revendication 1, **caractérisé en ce que** l'anneau d'induit (22, 62) ou le au moins second acteur coopère avec un dispositif d'encliquetage (104) de telle sorte que le corps de poussée (100) est fixé localement par le dispositif d'encliquetage (104) au moins lorsque l'anneau d'induit (22, 62) ne sollicite pas le corps de poussée (100).

3. Procédé suivant l'une des revendications 1 et 2,
**caractérisé en ce que** le dispositif d'encliquetage (104) exécute au moins un mouvement de rotation, pour fixer localement le corps de poussée (100) de façon temporaire.

4. Procédé suivant l'une des revendications précédentes, **caractérisé en ce que** le dispositif d'encliquetage (104) est déplacé par au moins un troisième acteur.

5. Procédé suivant l'une des revendications précitées, **caractérisé en ce que** le corps de poussée (100) est sollicité mécaniquement par le au moins premier acteur (11, 12, 13, 14).

6. Procédé suivant l'une des revendications précitées, **caractérisé en ce que** le au moins anneau d'induit (22, 62) coopère avec le corps de poussée (100), le au moins anneau d'induit (22, 62) étant tourné dans un sens de rotation autour de l'axe longitudinal, et que le dispositif d'encliquetage (104) provoque un verrouillage, qui fixe à chaque fois en position le corps de poussée (100) jusqu'à ce que le au moins premier acteur (11, 12, 13, 14) sollicite de nouveau le corps de poussée (100).

7. Procédé suivant l'une des revendications précitées, **caractérisé en ce que** le au moins anneau d'induit (22, 62) coopère avec le corps de poussée (100), le au moins anneau d'induit (22, 62) étant tourné en alternance dans les sens de rotation autour de l'axe longitudinal, et **en ce que** le dispositif d'encliquetage (104) provoque un verrouillage, qui fixe à chaque fois en position le corps de poussée (100) jusqu'à ce que le au moins premier acteur (11, 12, 13, 14) sollicite de nouveau le corps de poussée (100).

8. Procédé suivant l'une des revendications précitées, **caractérisé en ce que** le déplacement pas à pas du corps de poussée (100) est achevé lorsqu'un nombre défini de cycles de déplacement est atteint ou lorsque l'arrêt est provoqué par un signal.

9. Agencement pour la mise en oeuvre du procédé d'entraînement d'un corps de poussée (100) par une commande magnétique bidirectionnelle linéaire (180) suivant l'une des revendications précitées, la commande magnétique bidirectionnelle linéaire (180) comportant au moins un premier (11, 12, 13, 14) et un second acteur, le au moins premier acteur (11, 12, 13, 14) ayant au moins une culasse (20, 60), au moins une bobine (72, 73, 74, 75) ainsi qu'au moins un anneau d'induit (22, 62) et étant prévu pour le déplacement essentiellement axial du corps de poussée (100), l'écartement entre la au moins culasse (20, 60) et le au moins anneau d'induit (22, 62) étant réalisé sous forme d'entrefer actif (24, 64, 65), **caractérisé en ce que** le au moins anneau d'induit (22, 62) est prévu pour coopérer avec le corps de poussée (100), le au moins second acteur est prévu au moins pour la rotation de le au moins anneau d'induit (22, 62), et un dispositif d'encliquetage (104, 192) est prévu pour la fixation temporaire du corps de poussée (100).

10. Agencement suivant la revendication 9, **caractérisé en ce que** le au moins premier acteur (11, 12, 13, 14) comporte au moins deux aimants permanents (68, 69, 198), les aimants permanents (68, 69, 198) provoquant le serrage magnétique instable de le au moins anneau d'induit (22, 62).

11. Agencement suivant l'une des revendications 9 et 10, **caractérisé en ce que** la surface du corps de poussée (100) est munie au moins en partie d'une structure de retenue (54) dans la zone de la surface tournée vers le au moins anneau d'induit (22, 62), et **en ce que** le au moins anneau d'induit (22, 62) est muni sur la surface tournée vers le corps de poussée d'une structure antagoniste compatible avec la structure de retenue (54), qui s'insère dans la structure de retenue (54) par rotation autour de l'axe longitudinal de l'anneau d'induit (22, 62, 200).

12. Agencement suivant l'une des revendications 9 à 11, **caractérisé en ce que** le corps de poussée (100) présente une forme de base cylindrique ou analogue à un poussoir.

13. Agencement suivant l'une des revendications 9 à 12, **caractérisé en ce que** le corps de poussée (100) présente une forme de base annulaire ou tubulaire.

14. Agencement suivant l'une des revendications 11 à 13, **caractérisé en ce que** la structure de retenue (54) comporte des premiers creux dans la direction parallèle à l'axe du corps de poussée (100), qui permettent un déplacement correspondant de le au moins anneau d'induit (22, 62, 200), et **en ce que** la structure de retenue (54) comporte des seconds creux dans la direction radiale du corps de poussée (100), qui permettent un mouvement de rotation correspondant de le au moins anneau d'induit (22, 62, 200).

15. Agencement suivant l'une des revendications 11 à 14, **caractérisé en ce que** la structure de retenue (54) comporte des creux essentiellement hélicoïdaux, qui permettent un déplacement axial - radial combiné de l'anneau d'induit (22, 62, 200).

16. Agencement suivant l'une des revendications 11 à 15, **caractérisé en ce que** les creux sont des gorges, des fentes ou analogues à des filets.

17. Agencement suivant l'une des revendications 11 à 16, **caractérisé en ce qu'**au moins la structure de retenue (54) est fabriquée en acier spécial.

18. Agencement suivant l'une des revendications 11 à 17, **caractérisé en ce que** la structure antagoniste est adaptée à la structure de retenue (54) de sorte qu'elles s'engagent dans les creux de cette dernière, prévus dans la direction radiale ou en hélice sur le corps de poussée (100), par un déplacement essentiellement radial de la structure antagoniste ou de la structure de retenue (54).

19. Agencement suivant l'une des revendications 11 à 18, **caractérisé en ce que** la structure antagoniste est configurée, en particulier par des creux ou gorges s'étendant parallèlement à l'axe longitudinal, de sorte qu'un déplacement essentiellement parallèle à l'axe du corps de poussée est permis de la structure antagoniste dans la structure de retenue (54).

20. Agencement suivant l'une des revendications 11 à 19, **caractérisé en ce que** la structure antagoniste est assemblée fixement avec le au moins anneau d'induit (22, 62, 200) ou est conformée sur ce dernier.

21. Agencement suivant l'une des revendications 11 à 20, **caractérisé en ce que** la structure antagoniste est fabriquée en acier spécial.

22. Agencement suivant l'une des revendications 11 à 21, **caractérisé en ce que** la structure antagoniste est un écrou (166) usiné en conséquence ou un écrou réversible.

23. Agencement suivant l'une des revendications 11 à 22, **caractérisé en ce que** la structure de retenue (54) ainsi que la structure antagoniste sont prévues dans la direction radiale entre le au moins anneau d'induit (22, 62, 200) et le corps de poussée (100).

24. Agencement suivant l'une des revendications 11 à 23, **caractérisé en ce que** la structure de retenue (54) ainsi que la structure antagoniste sont prévues au moins en partie à l'extérieur de la section de l'axe longitudinal, dans laquelle est prévu le au moins anneau d'induit (22, 62, 200).

25. Agencement suivant l'une des revendications 11 à 24, **caractérisé en ce qu'**au moins deux premiers acteurs (11, 12, 13, 14) sont prévus chacun avec un anneau d'induit (22, 62, 200), qui sont disposés de sorte qu'ils transmettent conjointement des forces au corps de poussée (100) ou en reçoivent de ce dernier.

26. Agencement suivant l'une des revendications 11 à 25, **caractérisé en ce que** la commande magnétique linéaire bidirectionnelle (180), le au moins second acteur, le corps de poussée (100) ainsi que le dispositif d'encliquetage (104, 150), se situent dans l'espace annulaire entre un tube extérieur (44) et un tube intérieur (46, 92).

27. Agencement suivant l'une des revendications 11 à 26, **caractérisé en ce que** le dispositif d'encliquetage (104, 150) est couplé à au moins un anneau d'induit (22, 62, 200) et suit en conséquence les mouvements de rotation de ce dernier ou utilise son mouvement de rotation en tant qu'entraînement.

28. Agencement suivant l'une des revendications 11 à 27, **caractérisé en ce que** le dispositif d'encliquetage (104, 150) est couplé au le au moins second acteur et suit en conséquence les mouvements de rotation de ce dernier ou utilise son mouvement de rotation en tant qu'entraînement.

29. Agencement suivant l'une des revendications 11 à 28, **caractérisé en ce que** le dispositif d'encliquetage (104, 150) comporte au moins un troisième acteur en tant qu'entraînement.

30. Agencement suivant l'une des revendications 11 à 29, **caractérisé en ce qu'**au moins un compteur pas à pas est prévu pour mesurer les cycles individuels d'avance et de recul et éventuellement pour afficher la position du corps de poussée (100) .

31. Agencement suivant l'une des revendications 11 à 30, **caractérisé en ce qu'**un capteur de déplacement linéaire est prévu pour mesurer et éventuellement afficher la position du corps de poussée (100).

32. Agencement suivant l'une des revendications 11 à 31, **caractérisé en ce qu'**un signal du compteur pas à pas, du capteur de déplacement linéaire ou d'un interrupteur de fin de course est prévu pour achever le déplacement axial du corps de poussée (100).

33. Agencement suivant l'une des revendications 11 à 32, **caractérisé en ce qu'**au moins un bloc d'alimentation est prévu pour l'alimentation en courant de tous les consommateurs de courant ou de consommateurs individuels.

34. Agencement suivant l'une des revendications 11 à 33, **caractérisé en ce que** le au moins premier acteur (11, 12, 13, 14) est encapsulé par rapport aux conditions ambiantes.

35. Agencement suivant la revendication 34, **caractérisé en ce que** de l'encapsulage comporte une paroi d'étanchéité mobile, qui est soit approximativement rigide, mais peut se déplacer ou glisser le long d'une glissière, soit flexible ou extensible, jusqu'à ce qu'un équilibre de pression soit créé entre l'intérieur de l'encapsulage et l'ambiance.

36. Agencement suivant la revendication 35, **caractérisé en ce que** l'étanchéité de la paroi par rapport à l'acteur ou au corps de poussée est obtenue par un joint de friction.

37. Agencement suivant l'une des revendications 11 à 36, **caractérisé en ce que** l'espace à l'intérieur de l'encapsulage est rempli d'un agent fluide.

38. Agencement suivant la revendication 37, **caractérisé en ce que** l'agent fluide est de l'huile résistante aux hautes températures.

39. Agencement suivant l'une des revendications 11 à 38, **caractérisé en ce que** de l'AlNiCo est utilisé en tant que matériau magnétique dur des aimants permanents (68, 69, 198) dans la commande magnétique bidirectionnelle linéaire (180).

40. Agencement suivant la revendication 39, **caractérisé en ce que** le matériau magnétique dur présente des températures de Curie d'au moins 600°C.

41. Agencement suivant l'une des revendications 11 à 40, **caractérisé en ce que** du RNi12 est utilisé en tant que matériau magnétique doux pour le au moins anneau d'induit (22, 62, 200) ainsi que la au moins culasse.

42. Agencement suivant l'une des revendications 11 à 41, **caractérisé en ce qu'**un dispositif de commande est prévu pour la coordination des phases de procédé.

43. Agencement suivant l'une des revendications 11 à 42, **caractérisé en ce qu'**une première zone d'alimentation est prévue sur la commande magnétique linéaire bidirectionnelle (180) sur toute l'extension axiale de cette dernière, zone au travers de laquelle peuvent passer en particulier des lignes de l'un des côtés axiaux en direction d'un second côté axial de la commande magnétique bidirectionnelle linéaire (180).

44. Agencement suivant l'une des revendications 11 à 43, **caractérisé en ce que** la première zone d'alimentation est un creux en forme partielle de cylindre creux de la commande magnétique linéaire bidirectionnelle (180).

45. Agencement suivant l'une des revendications 11 à 42, **caractérisé en ce que** le tube intérieur (46) est guidé de façon excentrée dans le tube extérieur (44) au moins dans la zone de la commande magnétique linéaire bidirectionnelle (180), et qu'une seconde zone d'alimentation se situe entre le diamètre extérieur de la commande magnétique bidirectionnelle (180) ainsi que le diamètre intérieur du tube extérieur (44), zone au travers de laquelle peuvent en particulier passer des lignes d'un côté axial en direction d'un second côté axial de la commande magnétique linéaire bidirectionnelle (180).
